(19) **Europäisches Patentamt / European Patent Office / Office européen des brevets**

(11) **EP 2 049 604 B1**

(12) **EUROPÄISCHE PATENTSCHRIFT**

(45) Veröffentlichungstag und Bekanntmachung des Hinweises auf die Patenterteilung:
**18.11.2009  Patentblatt 2009/47**

(21) Anmeldenummer: **08774021.3**

(22) Anmeldetag: **18.07.2008**

(51) Int Cl.:
***C09C 1/00*** *(2006.01)*

(86) Internationale Anmeldenummer:
**PCT/EP2008/005901**

(87) Internationale Veröffentlichungsnummer:
**WO 2009/015788 (05.02.2009 Gazette 2009/06)**

(54) **METALLIC-LACK, VERFAHREN ZU SEINER HERSTELLUNG UND VERWENDUNG DESSELBEN**

METALLIC PAINT, METHOD FOR THE PRODUCTION THEREOF, AND USE THEREOF

PEINTURE MÉTALLIQUE, PROCÉDÉ DE FABRICATION ET UTILISATION ASSOCIÉS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.07.2007  DE 102007036369**

(43) Veröffentlichungstag der Anmeldung:
**22.04.2009  Patentblatt 2009/17**

(73) Patentinhaber: **Eckart GmbH**
**90763 Fürth (DE)**

(72) Erfinder:
- **VOIT, Thomas**
  **91275 Auerbach (DE)**
- **SCHRAMM, Christian**
  **91217 Hersbruck (DE)**

(74) Vertreter: **Walcher, Armin**
**Louis, Pöhlau, Lohrentz**
**Postfach 3055**
**90014 Nürnberg (DE)**

(56) Entgegenhaltungen:
**DE-A1- 19 820 112     DE-A1-102005 026 523**
**US-A1- 2005 004 265**

**Beschreibung**

Die Erfindung betrifft einen Metallic-Lack, welcher Wasser und/oder organisches Lösemittel sowie wenigstens ein filmbildendes Mittel umfassend organofunktionelle Silane und wenigstens ein leafing-Metalleffektpigment enthält. Des Weiteren betrifft die Erfindung ein Verfahren zur Herstellung dieses Metallic-Lackes als auch dessen Verwendung sowie einen mit diesem Metallic-Lack lackierten Gegenstand und eine Felgen-Lackierung.

Werkstücke, wie beispielsweise Fahrzeugteile, werden aus optischen und dekorativen bzw. korrosions- und verschleißhemmenden Zwecken mit einer Beschichtung versehen.

Herkömmliche Beschichtungsverfahren sind das Verchromen, Verdampfen oder Lackieren.

Beim Verchromen, insbesondere Glanzverchromen, werden Werkstoffe aus Eisen, Kupfer, Kupfer-Zink, Kupfer-Zinn und Aluminium auf übliche Weise eingesetzt. Jedoch muss die zu verchromende Werkstückfläche oftmals manuell oder maschinell poliert werden.

Das auch zum Beschichten von Metalloberflächen eingesetzte thermische Verdampfen (Aufdampfen, Bedampfen) ist eine zu den PVD-Verfahren gehörende hochvakuumbasierte Beschichtungstechnik. Typische Materialien für diesen Prozess sind Metalle, wie z.B. Aluminium, Kupfer, Silber, Gold, aber auch andere geeignete Materialien. Dieses bekannte Beschichtungsverfahren erfordert jedoch einen relativ hohen technischen Aufwand.

Zur Fahrzeuglackierung, insbesondere Felgenlackierung, werden besonders vorteilhaft Metallic-Lacke eingesetzt.

Lacke sind gemäß DIN 971-1 (09/1996) flüssige, pastenförmige oder pulverförmige Beschichtungsstoffe, die - auf einen Untergrund aufgebracht - eine deckende Beschichtung mit schützenden, dekorativen oder spezifischen technischen Eigenschaften ergeben. Die Hauptkomponenten der Lacke sind Bindemittel, Lösemittel, Pigmente, Füllstoffe und Lackhilfsmittel. Diese Lacke sind unter verschiedenen technischen Gesichtspunkten eingeteilt.

Metallic-Lacke sind Effektlacke mit den typischen Charakteristika eines metallischen Glanzes, hohem Hell-Dunkel-Flop und hoher Brillanz sowie hohem Deckvermögen. Metalliclackierungen. Sie enthalten plättchenförmige Metallpigmente, die sich in der Applikation weitgehend parallel zum Substrat orientieren. Durch die Wirkung vieler kleiner Spiegelchen entsteht so zum einen eine gerichtete Reflexion, die für den metallischen Glanz verantwortlich ist. Andererseits entsteht jedoch auch immer ein gewissen Anteil an Streustrahlung, der durch eine nicht vollständige planparallele Orientierung der Pigmente sowie durch Rauhigkeiten der einzelnen Pigmentteilchen, wie beispielsweise Kanten oder unebene Oberflächen, hervorgerufen wird. Daher sind Metalliclackierungen durch dieses Wechselspiel gerichteter und diffus gestreuter Strahlung charakterisiert, die den Hell-Dunkel-Flop hervorrufen. Auch kann man bei gewöhnlichen Metalliclackierungen zwar nicht mehr einzelne Pigmentteilchen, so doch immer eine partikuläre Struktur des Lackes feststellen. Dieses Phänomen ist im Rahmen der Farbmetrik nur schwer detektierbar.

Mithin unterscheidet sich gewöhnlicherweise das optische Erscheinungsbild von mit plättchenförmigen Metallpigmenten pigmentierten Metallic-Lacken von dem Aussehen reiner Metalloberflächen, bei denen praktisch keine Streueffekte auftreten.

Metallic-Lacke sind auch durch Verwendung teurer PVD-Metallpigmente zugänglich.

Die in der Herstellung relativ teuren PVD-Pigmente sind Non-Leafing-Pigmente, d. h. vom Bindemittel vollständig benetzte Pigmente, die sich im gesamten Lackfilm, jedoch nicht an der Oberfläche des Lackfilmes, verteilen. PVD-Pigmentlacke haben einen Bindemittelanteil von nur bis zu ca. 10 Gew.-%, bezogen auf das Gesamtgewicht des Lackes, wodurch die Pigmenteigenschaften hinsichtlich Lackoptik, wie beispielsweise Glanzgrad, voll zum Tragen kommen.

Um mit einem PVD-Metallpigment-Metallic-Lack die gewünschten Lackierungseffekte zu erzielen, müssen die zu lackierenden Untergründe sehr glatt (eben) und gründlich vorbehandelt sein. Ferner ist nachteilig, dass ein Schleifriefen aufweisendes Werkstück nicht mit einem PVD-Metallpigment-Metallic-Lack lackiert werden kann, da die Schleifriefen nicht abgedeckt werden. Auch können Lackierungsfehler nicht behoben werden. Vielmehr muss bei einem Lackierungsfehler die PVD-Lackierung von dem Werkstück entfernt und das Werkstück neu lackiert werden.

Des Weiteren neigen diese bekannten PVD-Pigmente enthaltenden Chromeffektlacke dazu, insbesondere bei einer Spritzlackierung, zur Bildung von "Wolken", d.h. in der Ausbildung unterschiedlich heller und dunkler Schattierungen in der Lackoberfläche, wodurch die Lackoberflächenoptik negativ beeinträchtigt wird. Die Wolkenbildung resultiert aus der ungleichmäßigen Orientierung der herkömmlichen Aluminiumpigmente, insbesondere durch praktisch senkrecht stehende Aluminiumpigmente in der Lackierung.

Diese Lackierungsfehler sind insbesondere bei der Lackierung von großflächigen Werkstoffen zu verzeichnen, beispielsweise von Karosserieteilen. Zudem ist ein optimaler Lackierungseffekt von den Parametern der jeweiligen Applikationsart (trocken, nass) abhängig.

Ein weiterer Nachteil von PVD-Pigmentlacken ist ihre problematische Handhabung in wässrigen Beschichtungszusammensetzungen. Aufgrund ihrer äußerst hohen und glatten spezifischen Oberfläche ist deren Agglomerationsneigung sehr hoch. Zudem lassen sich PVD-Pigmentlacke relativ schwer applizieren. Gleichmäßig aussehende Automobillackierungen können nur mittels Handlackierung in dünnen Schichten in vielen Lackierschritten erfolgen. Ein derart empfindliches Applikationsverhalten steht einer automatisierten Lackierung, wie sie beispielsweise für Kfz-Lak-

kierungen üblich sind, entgegen.

Leafing-Pigmente werden aufgrund hoher Grenzflächenflächenspannung vom Bindemittel nicht benetzt und schwimmen deshalb im wässrigen Lackfilm auf und richten sich an der Lackfilmoberfläche aus. Diesen Effekt erzielt man beispielsweise durch Verwendung von Stearinsäure als Mahlhilfsmittel bei der Vermahlung von Partikeln eines Metallgriesses, beispielsweise eines Aluminium-Sprühgriesses. Solche plättchenförmigen Leafing-Pigmente bilden an der Lackoberfläche einen dichten Spiegel von parallel zur Lackoberfläche orientierten Metalleffektpigmente. Diese Metalleffektpigmente mit einem hohen metallischen Glanz weisen aber nur eine eingeschränkte Wisch- und Kratzfestigkeit auf, da die Metalleffektpigmente in der Bindemittelmatrix nur unzureichend fixiert sind. Leafing-Pigmente erzeugen also durch ihr Aufschwimmverhalten eine dichte Sperrschicht an der Lackoberfläche. Damit ist eine wirkungsvolle Überlakkierbarkeit, beispielsweise durch einen Klarlack, nicht mehr möglich. Diese Sperrschicht behindert bzw. verhindert eine zuverlässige Haftung des Decklackes auf der Basislackoberfläche, so dass es bei Gebrauch eines lackierten Gegenstandes zu Ablösungen der Deckschicht und zur Beschädigung der Metalleffektpigment-haltigen Schicht kommen kann. Zudem werden durch den Decklack, beispielsweise Klarlack, die optischen Eigenschaften des Basis-Metalllackes, insbesondere dessen Glanz, negativ beeinträchtigt, d. h. der Glanzgrad verringert sich.

Ein weiterer wesentlicher Nachteil von herkömmlichen Metallic-Lackierungen ist deren nicht für jeden Einsatzzweck ausreichende Wisch- und Kratzfestigkeit sowie Abriebstabilität (DIN 55923) aufgrund der vorab beschriebenen unzureichenden Fixierung der Aluminiumplättchen in der Bindemittelmatrix.

Beim Einsatz von Aluminiumeffektpigmenten in umweltfreundlichen wässrigen Lacksystemen, wie beispielsweise Wasserlacken, besteht das Problem, eine chemische Reaktion von Aluminium mit Wasser zur Vermeidung einer unerwünschten Wasserstoffentwicklung zu unterbinden. Die dazu angewandte konventionelle Hydrophobierung der Aluminiumoberfläche durch Mahlhilfsmittel wie Stearinsäure ist i. d. R, nicht ausreichend, um die Reaktion der Aluminiumpigmente mit Wasser und damit den Verlust des metallischen Glanzes und Beeinträchtigung der Lagerstabilität, beispielsweise durch Agglomeration, zu verhindern. Deshalb werden für wässrige Lacksysteme, beispielsweiseWasserlacke, eingesetzte Aluminiumeffektpigmente mit einer Korrosionsschutzbeschichtung versehen. Der Korrosionsschutz besteht beispielsweise darin, dass auf die Aluminiumoberfläche Korrosionsinhibitoren, beispielsweise phosphororganische Verbindungen, aufgebracht werden. Weiterhin können die Aluminiumpigmente auch durch sogenannte Konversionsschichten passiviert, d.h. gegenüber Korrosion geschützt werden, wie beispielsweise eine Chromatierung (EP 0 259 592 B1). Ein drittes Stabilisierungsprinzip beruht auf die vollständige Einkapselung des Aluminiumeffektpigments in eine chemisch inerte, weitgehend transparente Schicht, üblicherweise durch Sol/Gel-Prozesse erzeugte Schutzschichten, wie z. B. eine $SiO_2$-Beschichtung.

Für die Pigmentierung von hochglänzenden Metallic-Lacken werden vorteilhaft dünne, durch Vermahlungsverformung von Aluminiumgrieß erhaltene, plättchenförmige Leafing-Aluminiumeffektpigmente, die auch als "Silberdollar" bezeichnet werden, eingesetzt. Diese Aluminiumeffektpigmente weisen - im Vergleich zu den auch als "Cornflakes" bezeichneten Aluminiumpigmenten aus der Zerkleinerungsvermahlung - eine relativ runde Form und eine relativ glatte Oberfläche auf. Die auch als Cornflakes bezeichneten Aluminiumeffektpigmente unterscheiden sich von den auch als Silberdollar bezeichneten Aluminiumeffektpigmente dadurch, dass die Oberfläche rauher und die Ränder teilweise eingerissen sind.

Die WO 01/81483 betrifft eine Pigmentzubereitung und einen aus dieser hergestellten wässrigen Effektbasislack mit besonders guter Scherstabilität für Fahrzeuglackierungen. Die Pigmentzubereitung enthält mindestens ein Carboxylfunktionelles Harz und mit Wasser mischbare organische Lösungsmittel sowie mit einer Silizium-Sauerstoff-Matrix beschichtete Metallpigmente, beispielsweise Aluminiumpigmente wie kommerziell verfügbares "STAPA IL Hydrolan", ein non-leafing Aluminiumeffektpigment von der Fa. Eckart. Die dort beschriebenen Lackzusammensetzungen entsprechen einem üblichen Metalliclack, ohne jedoch die Besonderheiten eines Chromeffektlackes aufzuweisen.

Weiterhin offenbart WO2006/110331A1 eine Beschichtungszusammensetzung für Korrosionsschutzlacke für Metall, Kunststoff und sonstige Substrate. Diese Zusammensetzungen enthalten unter anderem Metallpigmentpulver (in Flakeform wie auch als Metallpulver) mit einer Korngröße von 100 - 325 mesh. Gemäß dem U.S. Bureau of Standards betrifft dies Pigmente mit einem $D_{100}$-Wert von ungefähr 212 $\mu$m und einem $D_{50}$-Wert von ungefähr 62 $\mu$m.

DE 100 39 404 A1 betrifft eine organisch modifizierte, anorganische pigmentierte Zusammensetzung für den Korrosionsschutz von Metalloberflächen. Diese mittels Sol-Gel-Prozess auf Grundlage von Polysiloxanen hergestellte Zusammensetzung kann auch mit durch konventionelle Vermahlung von runden Aluminiumkörnern in Kugelmühlen in Gegenwart von "Schmiermitteln", wie z.B. Stearinsäure, hergestellte Leafing-Metallpigmente mit einem mittleren Teilchendurchmesser von mindestens 0,5 $\mu$m pigmentiert sein.

Dagegen offenbart DE 198 20 112 A1 ein mit wenigstens einem reaktiven Oberflächenmodifizierungsmittel beschichtetes Effektpigment zur Herstellung von Farben, Druckfarben, Lacken, Beschichtungen und Kunststoffen. Diese eine Teilchengröße von 1 bis 200 $\mu$m aufweisenden Effektpigmente, u. a. auch Aluminiumeffektpigmente, sollen sowohl leicht vom Bindemittel bzw. Lösungsmittel der Farbe oder des Lacks benetzt werden als auch sich gut im flüssigen Lackfilm orientieren können und zudem mit der sie umgebenden Bindemittelmatrix einen innigen Verbund eingehen, um Eigenschaften des Anwendungsmediums, wie z. B. Witterungsbeständigkeit, Korrosionsschutz, Brillanz, Schlagfestigkeit zu verbessern.

Aus DE 26 30 731 B2 ist die Verwendung von blättchenförmigen Non-Leafing- und Leafing-Aluminiumpigmenten mit einem transluzenten Polysiloxan-Überzug in elektrostatisch versprühbaren Nasslacken bekannt. Dieser ausschließlich elektrostatisch applizierbare Naßlack wird hergestellt, indem die in einem Lösungsmittel gelöste Silanverbindung in eine Anpastung der Metallpigmente eingearbeitet und gleichzeitig die Hydrolyse in bekannter Weise eingeleitet wird. Die Hydrolyse bzw. Vernetzung der Silane erfolgt chemisch oder thermisch.

Die DE 10100195 A1 betrifft einen wässrigen effektgebenden Beschichtungsstoff mit Effektpigmenten, Bindemittel und einem neutralisierenden Gemisch aus mindestens zwei Fettsäuren. In diesem auch für die Kfz-Lackierung einsetzbaren Beschichtungsstoff können u. a. auch passivierte Silberdollar- und Cornflakes-Aluminiumeffektpigmente mit einem für diese Pigmenttypen charakteristischen Teilchendurchmesser eingesetzt werden.

Zudem offenbart WO 2005/118722 eine wässrige Beschichtungszusammensetzung, mit wenigstens einem in Wasser kompatiblen filmbildenden Mittel und wenigstens eine anorganische Korrosionsschutzschicht aufweisenden plättchenfömigen Aluminiumpigmenten. Die in dieser auch für hochglänzende Automobillackierungen einsetzbaren Beschichtungszusammensetzung enthaltenden, durch mechanische Verformung von Sprühgriess hergestellten, passivierten Aluminiumeffektpigmente weisen eine mittlere Dicke von mindestens 50 nm auf. Die hier beschriebene Beschichtungszusammensetzung weist in der Applikation nicht den Glanz eines Chromeffektlackes auf.

Die DE 697 06 471 T2 betrifft eine wasserverdünnbare Beschichtungszusammensetzung, die mittels Hitzehärtung auf ein Substrat, auch auf ein Metallsubstrat wie Stahl, aufgebracht werden kann. Diese als Korrosionsschutzbeschichtung verwendete Beschichtung enthält u. a. eine hochsiedende organische Flüssigkeit (Siedepunkt oberhalb 100°C), ein partikuläres Metall, wie beispielsweise Aluminiumplättchen, und ein Wasser-reduzierbares Epoxyfunktionelles Silanbindemittel.

Aus DE 20 2006 016 073U1 sind ein Chromeffektlack und eine Chromeffektlackierung für Kraftfahrzeuge und Kraftfahrzeugteile bekannt. Dieser Chromeffektlack umfasst eine Suspension aus non-leafing Aluminiumpigmenten mit einer mittleren Teilchengröße von kleiner oder gleich 10 $\mu$m und zumindest ein organisches Lösemittel, wie z. B. Butylglykol. Die beanspruchte Chromeffektlackierung besteht aus mindestens einer Vorlack- und einer die Aluminiumpigmente enthaltenden Effektlack- sowie einer Klarlackschicht.

DE 101 54 030 A1 offenbart ein effektgebendes wässriges Beschichtungsmittel, welches u. a. auch für Lackierungen von Kraftfahrzeugkarosserien/-teilen einsetzbar sein soll. Dieser bekannte Beschichtungsstoff enthält unterschiedliche Bindemittel, wie z. B. (Meth)Acrylat(co)polymerisate und Polyurethane, Effektpigmente und die Funktion eines Stabilisators für die Effektpigmente und die Funktion des Vernetzungsmittels übernehmende Siliciumverbindungen. Als Effektpigmente sind eine Vielzahl von Pigmenttypen in unterschiedlichen Einsatzformen, in Form von anorganischen und organischen farbgebenden Pigmenten, beispielsweise Metallplättchenpigmente und nichtmetallische Effektpigmente, angegeben. In dem einzigen, den Anmeldungsgegenstand erläuternden Beispiel, wurde aber nur ein stofflich nicht weiter charakterisiertes Aluminium-Effektpigment benannt.

Aus DE 696 25 797 T2 ist eine härtbare Harzmasse für die Verwendung in Überzugsmaterialien auf Wassergrundlage bekannt. Die unter Verwendung der neuen Harzmasse hergestellten Überzugsmaterialien, z. B. auch zur Verwendung im Automobilbereich, sollen wesentlich verbesserte Beschichtungs- und Härtungseigenschaften sowie ausgezeichnete Beständigkeit gegenüber Bewitterung, Lösungsmitteln, Chemikalien und Wasser aufweisen. Dieses bekannte Anstrichmittel (Harzmasse) enthält wenigstens ein Emulsionspolymer (A) mit tertiären Aminogruppen und eine Verbindung (B) mit mindestens einer Epoxygruppe und hydrolysierbare Silylgruppe und kann auch eine weitere Verbindung (C) enthalten. Zur Erzielung einer metallisch glänzenden Oberfläche kann dieses Anstrichmittel auch eine nicht näher beschriebene Aluminiumpaste enthalten.

DE 10 2005 026 523 A1 betrifft einen Zweikomponenten-Korrosionsschutzlack mit Metallpigment, Epoxybindemittelkomponente und aminischem Härter zur Herstellung von Korrosionsschutzbeschichtungen. Dieser bekannte Schutzlack besteht aus einer Komponente (A) mit plättchenartigen Metallpigmenten und mindestens einem Epoxysilan und/oder Epoxysilikon sowie einem organischen Lösemittel und einer Komponente (B) mit mindestens einen aminischen Härter und plättchenartigen Metallpigmenten und einem organischen Lösemittel. In diesem bekannten Korrosionsschutzlack werden plättchenartige Zink- und Aluminium-haltige Metallpigmente in unterschiedlichen Gewichts- und Mischungsverhältnissen eingesetzt. Bei diesem Lack sind die optisch-dekorativen Eigenschaften nicht interessant.

Schließlich zeigt EP 0 451 785 B1 durch konventionelle Nassvermahlung hergestellte Nonleafing Aluminiumpigmente mit einem hohen Reflektionsgrad und einer hohen Deckung. Der durchschnittliche Teilchendurchmesser des durch einen Deckfilm passivierten Aluminiumpigmentes beträgt 5-25 $\mu$m

Aufgabe der vorliegenden Erfindung ist es, einen neuen effektgebenden Metallic-Lack bereitzustellen, der sich einfach herstellen lässt, lagerstabil ist und Lackierungen ermöglicht, welche einen sehr hohen Metallglanz und vorzugsweise das Aussehen eines im wesentlichen strukturlosen, geschlossenen flüssigen Metallfilms bei geringen Pigmentierungshöhen aufweisen.

Der wässrige oder lösemittelhaltige Metallic-Lack soll sowohl als Einschichtsystem einsetzbar als auch überlackierbar sein, d.h. als Zwei- oder Mehrschichtsystem ausbildbar sein. Weiterhin soll der neue Metallic-Lack besonders vorteilhaft in der Fahrzeuglackierung, insbesondere in der Felgenlackierung, wobei der Metallic-Lack vorzugsweise eine hohe Deckkraft und Schleifriefenabdeckung, eine verminderte Schmutzanfälligkeit, eine hohe Kratz- und Abriebfestigkeit und/oder eine hohe Chemikalien- und Witterungsbeständigkeit aufweisen, einsetzbar sein.

Eine weitere Aufgabe der Erfindung ist es, einen Metallic-Lack bereitzustellen, welcher kostengünstige Metalleffektpigmente enthält.

Des Weiteren soll sich der neue Metallic-Lack einfacher applizieren lassen als ein PVD-Pigmente enthaltender Metallic-Lack.

Die Aufgabe wird gelöst durch die Bereitstellung eines Metallic-Lackes, welcher Wasser und/oder organisches Lösemittel, wenigstens ein filmbildendes Mittel, wenigstens ein organofunktionelles Silanund wenigstens ein leafing-Metalleffektpigment, wobei das Metalleffektpigment ein leafing-Aluminiumeffektpigment ist, enthält.

Der erfindungsgemäße Metallic-Lack zeichnet sich durch einen Chromeffekt aus und kann mithin auch als Metallic-Lack mit Chromeffekt bezeichnet werden.

Unter einem "Chromeffektlack" wird ein Lack verstanden, der in der Lackapplikation weitgehend die optischen Eigenschaften einer metallisierten, insbesondere verchromten, Oberfläche aufweist. Hierunter sind insbesondere ein extrem hoher Glanz und das Aussehen eines im wesentlichen strukturlosen, geschlossenen flüssigen Metallfilms zu verstehen. Im Rahmen dieser Erfindung besitzt ein Chromeffektlack einen Glanzwert von mehr als 350 Glanzeinheiten. Der Glanzwert ist dabei eine dimensionslose Kennzahl, die mit dem micro-Tri-gloss $\mu$-Gerät der Firma Byk-Gardener bei einem Messwinkel von 60° gemäß Herstellerangaben ermittelbar ist.

Gemäß einer bevorzugten Ausführungsform weist der erfindungsgemässe Metalliclack nach Applikation Glanzwerte von mehr als 350 Einheiten, weiter bevorzugt von mehr als 400 Einheiten, noch weiter bevorzugt von mehr als 425 Einheiten, und mithin die Eigenschaften eines Chromeffektlackes auf. Die Glanzmessungen werden dabei mit einem micro-Tri-gloss $\mu$-Gerät der Firma Byk-Gardener unter einem Messwinkel von 60° gemäß Herstellerangaben durchgeführt.

Bei dem erfindungsgemäß zu verwendenden Aluminiumeffektpigment handelt es sich vorzugsweise um durch mechanische Verformungsbehandlung, vorzugsweise durch Vermahlung, erhaltene plättchenförmige Aluminiumpigmente.

Bevorzugte Weiterbildungen des erfindungsgemäßen Metallic-Lackes mit leafing-Aluminiumeffektpigmenten sind in den Unteransprüchen 2 bis 10 angegeben.

Die der Erfindung zugrunde liegende Aufgabe wird weiterhin durch ein Verfahren gemäß Anspruch 11 zur Herstellung des erfindungsgemäßen Metallic-Lackes gelöst, das folgenden Schritt umfasst:

Vermengen von Leafing-Aluminiumeffektpigmenten, wenigstens einem organofunktionellen Silan sowie wenigstens einem filmbildenden
Bindemittel.

Gemäß einer bevorzugten Weiterbildung der Erfindung kann die zum Applizieren des Lackes erforderliche Viskosität durch Zugabe von organischem Lösemittel und/oder Wasser eingestellt werden.

Weiterhin ist bei dem erfindungsgemäßen Verfahren bevorzugt, dass die Leafing-Aluminiumpigmente bei dem erfindungsgemäßen Verfahren in Pastenform mit den weiteren Komponenten sowie Wasser und/oder organischem Lösungsmittel unter Bereitstellung des Metallic-Lackes vermengt werden.

Gemäß einer Weiterbildung des erfindungsgemäßen Verfahrens werden die Leafing-Aluminiumeffektpigmente durch mechanische Vermahlung und/oder mechanische Verformung von Aluminiumpartikeln unter Verwendung von wenigstens einem organischen Schmiermittel, bevorzugt Stearinsäure, hergestellt.

Die der Erfindung zugrunde liegende Aufgabe wird weiterhin durch die Verwendung des erfindungsgemäßen Metallic-Lackes gemäß einem der Ansprüche 1 bis 10 und durch einen mit dem erfindungsgemäßen Metallic-Lack lackierten Gegenstand, vorzugsweise Kfz-Felgen, Kühlergrills, Türgriffe, Leisten, Stoßstangen, etc., sowie einer Fahrzeug-Lackierung, vorzugsweise eine Felgenlackierung,gemäß gelöst.

Vorzugsweise wird der erfindungsgemäße Metallic-Lackes nach einem der Ansprüche 1 bis 10 in hochglänzenden Coatings mit ausgeprägtem Metalliceffekt, wie Automobillacken, Reparaturlackierungen, Industrielackierungen und Lackierungen von Metall, Kunststoffen, Holz oder Glas verwendet.

Zur Herstellung des erfindungsgemäßen Metallic-Lackes wird vorteilhaft eine durch Kugelmühlenvermahlung in Gegenwart von Isopropanol und Stearinsäure erhaltene Aluminiumeffektpigmente enthaltende, kommerziell gehandelte Leafing-Aluminiumpigment-Paste der Fa. Eckart GmbH & Co. KG, D-91235 Velden, in handelsüblichem organischem Lösemittel, beispielsweise Isopropanol, dispergiert und die vorliegende Pigmentdispersion mit wenigstens einem handelsüblichen organofunktionellen Silan, beispielsweise einem Epoxysilan, und mit wenigstens einem, vorzugsweise wenigstens eine Harzkomponente enthaltenden, handelsüblichen filmbildenden Bindemittel zu einem Lack gemischt. Der so erhaltene Lack kann mit organischem Lösemittel, wie z. B. Butylglykol, und/oder mit Wasser, auf die zum Applizieren erforderliche Viskosität verdünnt werden und auf bekannte Art und Weise, beispielsweise durch Hochdruckspritzen, auf ein Werkstück, beispielsweise auf ein Fahrzeugteil, beispielsweise einer Fahrzeugfelge oder auf eine nichtmetallische Oberfläche wie beispielsweise Kunststoff, Holz oder Glas, appliziert werden.

Überraschenderweise stellte sich heraus, dass Metalliclackierungen mit sehr hohen Glanzgraden und einem strukturlosen, flüssiges Metall nachahmenden Aussehen erhalten werden können, indem man einen Lack enthaltend leafing-Aluminiumeffektpigmente mit Epoxysilan-haltigem Bindemittel bereitstellt.

Bedingt durch die leafing-Eigenschaften der Aluminiumeffektpigmente sind diese hauptsächlich an oder in der Nähe der Oberfläche des applizierten Lackfilmes lokalisiert und weisen eine sehr gute Orientierung auf, was zu einem sehr hohen Glanz des Lackes führt, mit vorzugsweise mehr als 350 Glanzeinheiten.

Überraschenderweise jedoch sind derartige Lackierungen überlackierbar, was nach bisherigem Stand der Technik mit leafing-Aluminiumeffektpigmenten nicht möglich war. Normalerweise sind leafing-Aluminiumeffektpigmente nicht abriebfest und stellen eine solche Barriere zwischen Basislack und nachfolgendem Klarlack dar, das keine ausreichende Haftung zwischen dieses Lackschichten gegeben ist. Offenbar wird durch die Zugabe von Epoxysilanen eben diese nötige Haftung vermittelt, ohne dass zum derzeitigen Zeitpunkt der genaue Mechanismus bekannt wäre.

Es wird vermutet, dass die Epoxysilane sich zumindest teilweise durch Hydrolyse- und Kondensationsprozesse auf den Oberflächen der Metallpigmente über Si-O-Al-Bindungen gebunden werden. Der Epoxyrest steht dann dem Klarlacksystem zur Vernetzung zur Verfügung.

Weiterhin stellte sich überraschenderweise heraus, dass vor allem zwei Arten von Aluminiumeffektpigmenten besonders geeignet zur Lösung der gestellten Aufgaben sind.
Beide Pigmente werden durch konventionelle Nassvermahlung und mithin nicht durch PVD-Verfahren hergestellt.

Diese Aluminiumeffektpigmente zeigen im Röntgendiffraktogramm, welches mit Pigmenten in im wesentlichen planparalleler Anordnung gemessen wurde, einen, zwei oder mehrere Hauptpeaks, die nicht den [111]-Reflexen und/ oder [222]-Reflexen entsprechen.

Die in den erfindungsgemäßen Metallic-Lacken eingesetzten Aluminiumeffektpigmente unterscheiden sich daher in signifikanter Weise in ihrem röntgendiffraktometrischen Verhalten von PVD-Pigmenten. Um Proben plättchenförmiger Aluminiumpigmente mittels der Röntgendiffraktometrie (XRD, X-ray Reflection Diffraction) zu untersuchen, werden die Pigmente zuvor im wesentlichen planparallel zum Probenuntergrund orientiert. Als Gerät eignet sich im Prinzip jedes kommerziell erhältliche Röntgendiffraktometer.

Unter im wesentlichen planparalleler Anordnung wird im Sinne der Erfindung verstanden, daß mindestens 80 % der Pigmente innerhalb eines Toleranzbereiches von +/- 15° zur Untergrundparallele vorhanden sind.

Man stellt fest, dass PVD-Pigmente stets einen Hauptpeak beim Reflex der [111]-Ebene aufweisen. Unter einer [111]-Ebene werden die Millerschen Indizes verstanden. Die [111]-Ebene entspricht der dichtest möglichen Ebene eines kubischflächenzentriert kristallisierenden Metalls. Dieses Ergebnis ist an sich bekannt, da man weiß, dass auf eine Folie aufgesputtertes Aluminium entsprechende Kristalle bildet. Überraschenderweise stellt man jedoch fest, dass die erfindungsgemäßen Aluminiumpigmente keinen Hauptpeak beim Reflex der [111]-Ebene aufweisen. Der Reflex der [111]-Ebene ist, wenn überhaupt vorhanden, stets schwach. Der oder möglicherweise die Hauptpeaks entsprechen bevorzugt den Reflexen der [200]- und/oder der [220]-Ebenen. Besonders bevorzugt entspricht der Hauptpeak der [200]-Ebene.

Im Gegensatz zu PVD-Pigmenten ist bei den Aluminiumeffektpigmenten des erfindungsgemäßen Metallic-Lackes das Intensitätsverhältnis [111]/[200] stets < 1. Bevorzugt ist dieses Verhältnis < 0,5 und besonders bevorzugt < 0,1.

Es wird vermutet, dass durch diese Eigenschaften der plastische Verformungszustand, in dem sich die Aluminiumpigmente während des Vermahlvorgangs befinden bzw. im Anschluss daran, widergespiegelt wird. Der zumindest polykristalline Aluminiumgrieß wird während der Verformungsmahlung starken Scherkräften ausgesetzt. Es findet eine Scherung einzelner Kristallite gegeneinander statt, wobei offenbar die dichtest gepackte [111]-Ebene die Scherebene ist. Da die Vermahlung naturgemäß senkrecht zur Plättchenoberfläche stattfindet, werden diese Ebenen aus der Plättchenebene weggebrochen, was anhand der abnehmenden Peakintensität im Diffraktogramm erkennbar ist. Gleichzeitig werden die Peaks der [200]- und der [220]- Ebenen intensiviert.

Bei einer bevorzugten Ausführungsform handelt es sich vorzugsweise um relativ grobkörnige leafing-Aluminiumeffektpigmente, vorzugsweise Silberdollarpigmente. Diese leafing-Aluminiumeffektpigmente, vorzugsweise Silberdollarpigmente, sind plättchenförmige Aluminiumeffektpigmente mit relativ glatter Oberfläche und runden Kanten. Sie werden durch eine Nassvermahlung, die im wesentlichen eine Verformungsmahlung von Aluminiumgrieß darstellt, gewonnen.

Bevorzugt werden diese leafing-Aluminiumeffektpigmente, vorzugsweise Silberdollarpigmente, durch eine Nassmahlung in alkoholische Medien wie beispielsweise Isopropanol, Ethanol oder n-Butanol hergestellt. Als Schmiermittel verwendet man bevorzugt langkettige gesättigte Fettsäuren wie z.B. Stearinsäure, Palmitinsäure oder Laurinsäure.

Bei einer weiteren bevorzugten Ausführungsform weisen diese leafing-Aluminiumeffektpigmente, vorzugsweise Silberdollarpigmente, bestimmte Größenverhältnisse auf. Diese werden durch charakteristische Parameter der Summendurchgangsverteilungskurve der Volumen-gemittelten Größenverteilung, die in üblicher Weise durch Laserbeugungsmethoden ermittelt werden, dargestellt. Im Rahmen dieser Arbeit wurden diese Werte mit dem Gerät Cilas 1064 der Fa Cilas (Frankreich) ermittelt.

Die Pigmente weisen bevorzugt einen $d_{50}$-Wert von 11 bis 35 $\mu$m und besonders bevorzugt von 13 bis 25 $\mu$m und weiter besonders bevorzugt von 15 bis 21 $\mu$m auf. Weiterhin weisen diese Silberdollarpigmente in ihrer Größenverteilung bevorzugt einen $d_{90}$-Wert von 23 bis 50 $\mu$m und besonders bevorzugt einen $d_{90}$-Wert von 25 bis 35 $\mu$m auf.

Unter einem $d_{50}$-Wert wird verstanden, dass 50 % der Pigmente innerhalb des angegebenen Größenbereichs liegen. Unter einem $d_{90}$-Wert wird verstanden, dass 90 % der Pigmente innerhalb des angegebenen Größenbereichs liegen.

Unterhalb eines $d_{50}$-Wertes von 11 $\mu$m weisen die Pigmente in der Lackapplikation nicht mehr die erforderlichen Glanzwerte auf. Oberhalb eines $d_{50}$-Wertes von 35 $\mu$m treten unerwünschte Sparkleeffekte und deutliche Glanzverminderung auf. Oberhalb eines $d_{50}$-Wertes von 25 läßt der optische Eindruck eines geschlossenen, flüssigen Metallfilms nach.

Diese plättchenförmigen Silberdollarpigmente mit leafing-Eigenschaften sind bevorzugt durch eine mittlere Dicke von über 80 bis 150 nm, bevorzugt durch eine mittlere Dicke von 100 bis 135 nm gekennzeichnet.

Die mittlere Dicke kann über Auszählung im REM, wie z.B. in der DE 103 15 775 A1 beschrieben oder durch die übliche Spreitungsmethode ermittelt werden.

Unterhalb von 80 nm mittlerer Plättchendicke können bei den Pigmenten Streuzentren in den Randbereichen der Aluminiumeffektpigmente auftreten, die zu einer Verminderung der Glanzeigenschaften führen können. Oberhalb einer mittleren Dicke von 150 nm zeigen die Lackapplikationen zu geringe Glanzwerte.

Beispiele derartiger leafing-Aluminiumeffektpigmente, vorzugsweise Silberdollarpigmente, sind die kommerziell verfügbaren Pigmente VP-59710/G (Fa. ECKART) oder EBP 251 (Fa, Silverline).

Die mit diesen leafing-Silberdollarpigmenten hergestellten erfindungsgemäßen Metallic-Lacke sind vor allem in Mehrschichtlackierungen geeignet, da sie hervorragend überlackierbar sind. Hierbei sind besonders wässrige Metalliclacke bevorzugt.

Bei einer weiteren bevorzugten Ausführungsform der Erfindung werden extrem dünne Leafing-Aluminiumeffektpigmente zur Herstellung des neuen Metallic-Lackes eingesetzt. Derartige Pigmente liegen in ihrem optischen Eigenschaften zwischen den vorgenannten Silberdollarpigmenten und den PVD-Pigmenten und sind dazu geeignet, die PVD-Pigmente zumindest teilweise bei hochwertigsten Anwendungen abzulösen (s. z.B. DE 103 15 775 A1). Man spricht hier auch von "Platindollarpigmenten" (Platindollar®, Marke der Firma Eckart).

Diese auch als Platindollar bezeichneten plättchenförmigen Aluminiumeffektpigmente mit sehr glatter Oberfläche und runden Kanten mit hoher Deckkraft weisen eine sehr geringe mittlere Dicke und zudem eine sehr enge Dickenverteilung auf.

Die in der vorliegenden Erfindung verwendeten Aluminiumpigmente werden durch eine äußerst schonende Verformungsmahlung eines feinen und relativ eng geschnittenen Aluminiumgrießes hergestellt. Der bevorzugt in "Atomizern" durch Verdüsung bzw. Zerstäubung von flüssigem Aluminium, vorzugsweise einer Aluminiumschmelze, hergestellte und ggf. auf die gewünschte Korngrößenverteilung klassierte Aluminiumgrieß, enthaltend Aluminiumpartikel in einer kugelförmigen bis leicht ellipsoiden Form, ist ein sehr feiner Metallgrieß mit einer sehr engen Größenverteilung und einem geringen Oxidgehalt mit kleiner 5 Gew. -%. Dieser Aluminiumgrieß weist eine in bekannter Art und Weise durch Laserbeugungsspektrometrie (z. B. mittels Gerätes Helos der Firma Sympatec GmbH, Clausthal-Zellerfeld, Deutschland) ermittelte Größenverteilung von $d_{Grieß,10} < 3{,}0$ $\mu$m, einen $d_{Grieß,50} < 5{,}0$ $\mu$m und einen $d_{Gieß,90} < 8{,}0$ $\mu$m auf. Bevorzugt umfasst die Größenverteilung einen $d_{Grieß,10} < 0{,}6$ $\mu$m, einen $d_{Grieß,50} < 2{,}0$ $\mu$m und einen $d_{Grieß,90} < 4{,}0$ $\mu$m.

Der ggf. zuvor klassierte Aluminiumgrieß wird unter Verwendung eines Mahlwerks in Gegenwart von Lösemittel, wie z. B. Testbenzin, Solvent Naphtha, Isopropanol, Ether, Ketone, Ester, usw., und Schmierstoffen, wie z. B. Fettsäuren mit Alkylresten von mindestens 14 bis 24 C-Atomen, vorzugsweise gesättigten Fettsäuren wie beispielsweise Stearinsäure, und Mahlkörpern, wie z.B. sphärischen Körpern wie vorzugsweise Kugeln mit Einzelgewichten von 2 bis 13 g, vermahlen. Anschließend kann das Pigment weiter Größen-klassiert oder auch zerkleinert werden.

Übliche Verfahren zur Größenklassierung sind beispielsweise die Naßsiebung, die Dekantierung oder auch die Trennung durch Sedimentation. Bei der Siebung wird i. d. R. der Grobanteil herausgesiebt. Bei den anderen Verfahren kann insbesondere der Feinstanteil abgetrennt werden. Anschließend wird die Suspension von überschüssigem Lösemittel getrennt, wie z. B. mit Hilfe einer Filterpresse, und vorzugsweise mit Lösemittel angepastet.

Bei einer bevorzugten Ausführungsform weisen die leafing Aluminiumeffektpigmente, vorzugsweise Platindollar-Pigmente, einen $d_{50}$-Wert von 2 bis 25 $\mu$m und bevorzugt von 2,5 bis 10 $\mu$m und besonders bevorzugt 3 bis 8 $\mu$m auf.

Unterhalb eines $d_{50}$-Wertes von 2 $\mu$m ist der Glanzwert der Applikation zu gering und die Schleifriefenabdeckung ist nicht ausreichend und oberhalb von 25 $\mu$m wurde ebenfalls ein Nachlassen des Glanzes in einer Einschichtlackierung festgestellt.

Weiterhin bevorzugt weisen diese leafing-Aluminiumeffektpigmente, vorzugsweise Platindollar-Pigmente, in ihrer Größenverteilungssummendurchgangskurve einen $d_{90}$-Wert von 8 bis 40 $\mu$m und besonders bevorzugt von 9 bis 14 auf $\mu$m (Cilas 1064) auf. Diese Werte sind vorzugsweise so zu verstehen, dass die untere Grenze von $d_{90} = 8$ $\mu$m

überwiegend zu Pigmenten mit $d_{50}$-Werten im unteren Bereich, beispielsweise ca. 2 bis 4 μm, sowie die obere Grenze von $d_{90}$ = 16 μm überwiegend zu Pigmenten mit $d_{50}$-Werten im oberen Bereich, beispielsweiseca. 5 bis 8 μm, zuzuordnen ist.

Diese Platindollarpigmente sind bevorzugt durch eine mittlere Dicke $h_{50}$ von 15 bis 100 nm, bevorzugt durch eine mittlere Dicke von 20 bis 75 nm und besonders bevorzugt von 25 bis 60 nm, gekennzeichnet.

Unterhalb einer mittleren Dicke von 15 nm werden die Pigmente zu dunkel, was auf den Verlust des metallischen Reflexionsvermögens unter Beibehaltung der hohen Absorptionseigenschaften des Aluminiums zurückzuführen ist. Außerdem werden die mechanischen Eigenschaften des Aluminiums in ungünstiger Weise verändert: die Pigmente werden zu brüchig. Oberhalb einer mittleren Dicke von 75 nm werden die vorteilhaften optischen Eigenschaften zunehmend beeinträchtigt, und oberhalb von 100 nm werden keine Eigenschaften entsprechend einem Chromeffektlack mehr erhalten.

Diese erfindungsgemäß eingesetzten Platindollarpigmente sind durch eine über übliche Dickenauszählung mit Rasterelektronenmikroskopie ermittelte und nach der Formel

$$\Delta h(\%) = 100 * \frac{h_{90} - h_{10}}{h_{50}}$$

$$\text{(I)}$$

berechnete relative Breite der Dickenverteilung Δh von vorzugsweise 30 bis unter 70 %, bevorzugt von 35 % bis 67 %, weiter bevorzugt von 40 % bis 65 % und besonders bevorzugt von 40 % bis 60 % gekennzeichnet.

Oberhalb eines Δh von 70 % waren die vorteilhaften Eigenschaften dieser Aluminiumpigmente im erfindungsgemäßen Metallic-Lack nicht mehr zu beobachten. Pigmente mit einer relativen Breite der Dickenverteilung Δh von unter 30 % konnten bislang nicht hergestellt werden.

Die treibende Kraft für eine planparallele Orientierung der plättchenförmigen Metallpigmente ist - neben grenzflächenchemischen Unverträglichkeiten der Aluminiumpigmente zum Bindemittelsystem - hauptsächlich der Formfaktor der Pigmente. Unter dem Formfaktor versteht man das Verhältnis von Längsdehnung $d_{50}$ zur Dicke $h_{50}$ der Pigmente. Die Längsdehnung wird vor allem anhand von Laserbeugungsmethoden bestimmt. Dabei wird in der Regel der $d_{50}$-Wert der Summendurchgangskurve herangezogen.

Der Formfaktor der beiden im erfindungsgemäßen Metallic-Lack eingesetzten Leafing-Aluminiumpigmenttypen (Silberdollar und Platindollar) beträgt 80 bis 400. Bevorzugt 100 bis 350, besonders bevorzugt 200 bis 300

Eine gestörte Orientierung der Aluminiumeffektpigmente im Überzug führt neben geringem Glanz zur Bildung von "Wolken", d.h. die optische Qualität der Lackoberflächen vermindernden Hell-Dunkel-Schattierungen, die auf einer Größenskala von mehreren Dezimetern feststellbar sind.

Der die Rauheit charakterisierende Rauwert R ist das Verhältnis der spezifischen Oberfläche - gemessen nach der BET-Methode (DIN 66132) - zur geometrischen Pigmentoberfläche. Die Pigmentoberfläche kann - unter Vernachlässigung des Randes der Pigmente - als aus dem $h_{50}$-Wert (REM) mittels bekannter Formel ermittelter, doppelter Spreitwert - mit nachfolgend aufgeführter Formel berechnet werden:

$$R = \text{BET-Wert (m}^2 / \text{g) x } 10^4 : 2 \text{ x Spreitwert ( cm}^2 / \text{g)} \qquad \text{(II)}$$

Anstelle des experimentell bestimmten Spreitwertes kann auch der über die REM-Auswertung ermittelte mittlere Dicke $h_{50}$ berechnete Spreitwert in obiger Formel verwendet werden:

$$\text{Spreitwert} = 10^7/h_{50} \text{ (nm) x 2,5 (g/cm}^3) \qquad \text{(III)}$$

(2,5: Dichte der Aluminiumpigmente)

Der Rauwert R ist ein Relativwert, da beide Methoden zur Bestimmung von Pigmentoberflächen keine physikalisch exakten Ergebnisse liefern. Eine ideal glatte Oberfläche sollte theoretisch einen Rauwert von 1 besitzen, tatsächlich findet am mitunter jedoch Werte kleiner als 1.

Die im erfindungsgemäßen Metallic-Lack eingesetzten, vorab beschriebenen beiden Aluminiumpigmenttypen weisen - aufgrund der mechanischen Verformung - einen die Rauheit bzw. Welligkeit charakterisierenden Rauwert von 0,3 bis 1,0 und bevorzugt von 0,5 bis 0,9 auf, die eine planparallele Anlagerung, d.h. eine Agglomeration von Aluminiumpigmenten aneinander verhindert, ohne dass es zu einer wesentlichen Beeinträchtigung der optischen Eigenschaften, wie Reflexionsvermögen und Glanz, dieser Pigmente kommt.

Derart niedrige Werte zeigen, dass es sich hier um sehr glatte Pigmentoberflächen handelt.

Die Gesamtmenge der im erfindungsgemäßen Lacksystem eingesetzten Leafing-Aluminiumeffektpigmente, was auch alsPigmentierungshöhe bezeichnet wird, bezogen auf das Gesamtgewicht des erfindungsgemäßen Metallic-Lackes, beträgt vorzugsweise weniger als 10 Gew. -%. Bevorzugt werden weniger als 5 Gew.-% und ganz besonders bevorzugt weniger als 3 Gew.-% eingesetzt.

Aufgrund der geringen Pigmentdicke ist deren spezifische Deckkraft ausgezeichnet, so dass außerordentlich niedrige Pigmentierungshöhen zur Erzielung des gewünschten visuellen Eindrucks ausreichend sind.

Die im erfindungsgemäßen Chromeffektlack eingesetzten Leafing-Aluminiumpigmente zeichnen sich aufgrund ihrer PVD-Pigment ähnlichen, geringen Dicke und ihrer engen Dickenverteilung durch ein einzigartiges metallisches Aussehen und eine hohe Deckkraft aus.

Zudem bewirkt deren sehr enge Dickenverteilung eine gute Orientierung und gleichmäßige Pigmentstapelung im Metallic-Lack.

Bei den in herkömmlichen, wässrigen Metalleffekt-Lacken eingesetzten passivierten, d.h. mit einer Korrosionsschutzschicht versehenen, Aluminiumpigmenten mit einer - im Vergleich zu den im erfindungsgemäßen Metallic-Lack eingesetzten Leafing-Aluminiumpigmenten - größeren Dicke und einer breiteren Dickenverteilung, kann es zu Ungleichmäßigkeiten in der Pigmentstapelung kommen. So können insbesondere sehr dicke Pigmente als "Abstandshalter" wirken, welche die Orientierung der umgebenden Pigmente beeinträchtigt. Hiervon werden wichtige Pigmenteigenschaften, wie beispielsweise Glanz, Flop und unter Umständen das Deckvermögen, nachteilig betroffen.

Die im erfindungsgemäßen Metallic-Lack eingesetzten Leafing-Aluminiumeffektpigmente besitzen eine mittlere Dicke und eine enge Dickenverteilung ähnlich wie PVD-Pigmente und ähneln daher in ihren optischen Eigenschaften den PVD-Pigmenten, sind jedoch wesentlicher einfacher und damit kostengünstiger als PVD-Pigmente mit stark verbesserten Handhabungseigenschaften herzustellen, wodurch beispielsweise eine wesentlich höhere Konzentrierung in Präparationen realisierbar ist. PVD-Aluminiumpigmente sind im Unterschied zu den bei der vorliegenden Erfindung verwendeten Aluminiumeffektpigmenten absolut planar. Die im Vergleich zu PVD-Aluminiumpigmenten bei den erfindungsgemäß zu verwendeten leafing-Aluminiumeffektpigmenten erhöhte Rauhigkeit führt bei nach Applikation des erfindungemäßen Metallic-Lackes zu keiner optisch merklichen Beeinträchtigung beim Glanz.

Es wird vermutet, dass der optische Effekt eines geschlossenen Metallfilmes, der den visuellen Eindruck eines im wesentlichen strukturlosen, vorzugsweise strukturlosen Metallfilms hervorruft, dadurch entsteht, dass die Aluminiumpigmente sich nach der Applikation (Lackierung) in dichtester Weise übereinander stapeln.

Dies ist insbesondere dadurch gegeben, dass sie als aufschwimmende Pigmente ("leafing-Pigmente") in einer sehr kleinen Raumschicht oberhalb des Basislackes lokalisiert sind.

Aufgrund ihrer Dünnheit können sie sich sehr gut übereinander stapeln, ohne dass es dabei zu Problemen wie Glanzschleier (Haze) kommt. Ein derartiges Verhalten ist von ähnlich dünnen, nach dem PVD-Verfahren hergestellten Aluminiumpigmenten bekannt, die sich vollständig an ihren Untergrund anschmiegen.

Es wird vermutet, dass der nahezu spiegelartige Metalleffekt der Aluminiumeffektpigmente im erfindungsgemäßen Metallic-Lack vor allem auf ihre leafing-Eigenschaften und daneben ursächlich auf die geringe Pigmentdicke und deren geringe Breite der Dickenverteilung sowie auf deren Formfaktor, welcher als treibende Kraft für eine planparallele Orientierung der Pigmente im Lack angesehen wird, zurückzuführen ist.

Die im erfindungsgemäßen Metallic-Lack als Filmbilder eingesetzten Silane sind vorteilhaft organofunktionelle Silane der Formel

$$R^1_a R^2_b SiX_{(4-a-b)} \qquad (IV)$$

Hierbei steht $R^1$ für einen nicht hydrolysierbaren Rest, $R^2$ für einen mindestens eine Epoxygruppe tragenden, nicht hydrolysierbaren Rest und X für gleiche oder voneinander verschiedene Reste, die ausgewählt sind aus der Hydroxylgruppe und hydrolysierbaren Substitutionsprodukten einer Hydroxylgruppe, wobei a ganzzahlige Werte von 0 bis 3 und b ganzzahlige Werte von 1 bis 3 annehmen können und a und b zusammen den Wert 1, 2 oder 3 haben.

Gemäß einer weiteren bevorzugten Ausführungsform liegt das Epoxysilan mit der allgemeinen Formel (IV) in oligomere oder polymerer Form vor, wobei die Einheiten über Si-O-Si-Brücken miteinander verbunden sind.

Bei einer bevorzugten Ausführungsform ist a gleich 0 und b gleich 1.

Der Rest X besteht vorzugsweise aus OH-, Halogen- oder aus Alkoxygruppen mit 1 bis 6, bevorzugt mit 1 bis 3, C-Atomen. Bevorzugt sind hierbei Alkoxygruppen und besonders bevorzugt sind Methyl- und/oder Ethylalkoxygruppen. Der bei der Hydrolyse der Alkoxygruppen frei werdende Alkohol wird bei einer bevorzugten Variante abdestilliert, so dass das Epoxysilan im wesentlichen frei von Lösungsmitteln ist.

Die Gruppe $R^2$ ist bevorzugt ein Glycidyl- oder ein Glycidyloxy-($C_1$ bis $C_{20}$)-alkylen-Rest sowie Oxiran-2-yl, 2,3-Epoxy- und 3,4-Epoxycyclopentyl-, 2,3- und 3,4-Epoxycyclohexyl- und 2,3-, 3,4- und 4,5-Epoxycycloheptyl-Resten, insbesondere auch Oxiran-2-yl und 2,3- und 3,4-Epoxycyclohexylgruppen ausgewählt. Insbesondere handelt es sich um einen γ-Glycidyloxyethyl-, γ-Glycidyloxyproyl-, γ-Glycidyloxybutyl-, γ-Glycidyloxypentyl-, γ-Glycidyloxyhexyl- oder 2-(3,4-Epoxycyclohexyl)-ethyl-Rest.

Die Gruppe $R^1$ ist bevorzugt ausgewählt aus der Gruppe bestehend aus ($C_1$ - $C_{40}$)-Alkyl-, -fluorierte Alkyl-, -teilfluorierte Alkyl-; ($C_2$ - $C_{40}$)-Alkenyl-, -Alkinyl-; ($C_6$ - $C_{36}$)-Aryl-, fluorierte -Aryl-, teilfluorierte -Aryl-; ($C_7$ - $C_{40}$)-Alkylaryl-, -Arylalkyl-, -fluorierte - Alkylaryl-, -teilfluorierte -Alkylaryl-; ($C_8$ - $C_{40}$)-Alkenylaryl-, -Arylalkinyl-, -Alkinylaryl-; ($C_5$ - $C_{40}$)-Cycloalkyl-, -Alkylcycloalkyl-, -Cycloalkylalkylgruppen.

Für a = 2 können die $R^1$-Gruppen gleich oder verschieden voneinander sein, sind jedoch bevorzugt gleich. Bevorzugt ist $R^1$ gleich Methyl, Ethyl oder Propyl oder a =0.

Weiterhin sind oligomere Silane der Formel (IV) einsetzbar, wobei es sich auch um Mischungen bzw. Oligomere unterschiedlicher Silane handeln kann.

Besonders bevorzugt werden aufgrund ihrer leichten Verfügbarkeit als Epoxysilane und/oder Epoxysilikone Oligomere von γ-Glycidyloxypropyltrimethoxysilan oder γ-Glycidyloxypropyltriethoxysilan oder deren Mischungen eingesetzt. γ-Glycidyloxypropyltrimethoxysilan ist kommerziell beispielsweise erhältlich unter den Namen Dynasylan GLYMO von der Firma Degussa (Untere Kanalstrasse 3, D-79618 Rheinfelden).

Weitere im erfindungsgemäßen Lack einsetzbare Silane sind beispielsweise in der BASF-US 7,109,263 B2 ausführlich beschrieben.

Derartige Silane sind kommerziell verfügbar. Beispielsweise sind dies viele Vertreter der von der Fa. Degussa, Rheinfelden, Deutschland, hergestellten und unter dem Handelsnamen "Dynasylan ®" vertriebenen Produkte bzw. der von der Fa. OSi Specialties produzierten Silquest®-Silane oder der Fa. Wacker, Burghausen, Deutschland, produzierten GENOSIL®-Silane.

Das verwendete Epoxysilan oder Epoxysilangemisch ist vorzugsweise bei Anwendungstemperaturen von ca: 0 bis 40 °C flüssig. Durch diese Eigenschaft kann insbesondere bei lösemittelhalten Lacksystemen vorteilhaft sein, um hier den VOC-Anteil so gering wie möglich zu halten.

Die funktionellen Silan-Gruppen können bevorzugt mit chemisch komplementären Gruppen des Beschichtungsmittels zur Reaktion gebracht werden, um das organofunktionelle Silan kovalent mit dem Beschichtungsmittel zu verbinden.

Weiterhin können im erfindungsgemäßen Lack handelsüblichen Bindemittel eingesetzt werden. Die Bindemittel können physikalisch, chemisch oder thermisch - kombiniert mit elektromagnetischer Strahlung ("dual-Cure") - härtbar sein. Bevorzugt sind die Bindemittel mit Wasser kompatibel.

Thermisch härtbare Bindemittel können selbst- oder fremdvernetzend sein.

Selbstvernetzende Bindemittel besitzen beide für die Härtung notwendige Arten von komplementären reaktiven Gruppen, Fremdvernetzende Bindemittel benötigen einen Härter oder Vernetzer.

Als Bindemittel können beispielsweise solche auf Basis von Polyurethanen, Polyamiden, Polyharnstoffen, Melaminharzen, Polyamiden, Polyacrylaten, Polymethacrylaten, Epoxidharzen, Polyether oder Polyester dienen. Möglich ist auch die Verwendung von Kombinationen dieser Funktionalitäten, wie z. B. Polyester-Polyurethane oder Polyester-Polyether-Polyurethane, Polyester-Polyacrylat oder Polyacrylat-Poyurethanen.

Bevorzugt werden Amingruppen-haltige Bindemittel, enthaltend primäre, sekundäre oder tertiäre Amine und hieraus besonders bevorzugt Melaminharze, eingesetzt. Derartige Bindemittel werden beispielsweise in der DE 101 540 30 A1 beschrieben.

Als Lösemittel im erfindungsgemäßen Metallic-Lack kommen Wasser und/oder organische Lösemittel, bevorzugt Alkohole wie n-Butanol, Isopropanol, Dowanol PM, Glycole wie Butylglycol, Butyldiglycol, Ethyldiglykol sowie Kohlenwasserstoffe wie Testbenzin oder Solvent Naphta sowie heterozyklische Verbindungen wie N-Methylpyrrolidon, zum Einsatz.

Der erfindungsgemäße Metallic-Lack weist vorzugsweise einen Wassergehalt und/oder Lösemittelgehalt von 5 bis 85 Gew. -%, bevorzugt 6 bis 60 Gew.-%, besonders bevorzugt 10 bis 50 Gew.-%, bezogen auf das Gesamtgewicht des Lackes, auf.

Der erfindungsgemäße Leafing-Metallic-Lack kann auch Zusatzstoffe wie Füllstoffe, Reaktivverdünner, UV-Absorber, Lichtschutzmittel, Radikalfänger, Photoinitiatoren oder-Coinitiatoren, Vernetzungsmittel, Entlüftungsmittel, Slipadditive, Inhibitoren, Entschäumungsmittel, Emulgatoren, Netz- und Dispergiermittel, Haftvermittler, Verlaufsmittel, filmbildende Hilfsmittel, Verdicker, Flammschutzmittel, Sikkative, Trocknungsmittel, Hautverhinderungsmittel, Korrosionsinhibitoren, Korrosionsschutzpigmente, Wachse und/oder Kombinationen dieser Zusatzstoffe enthalten.

Als Zusatzstoffe können besonders vorteilhaft auch handelsübliche Additive der Fa. BYK, Wesel, eingesetzt werden.

Der gesamte Feststoffgehalt, d.h. der nichtflüchtige Anteil nach DIN 53216, des erfindungsgemäßen Metallic-Lackes beträgt 5 bis 40 Gew. -%. Bevorzugt beträgt der gesamte Feststoffgehalt 9 bis 30 Gew. -% und besonders bevorzugt 10 bis 25 Gew. - %.

Bei Feststoffgehalten unter 5 Gew.-% ist die mechanische Haltbarkeit der Lackierung nach Applikation und Härtung (Trocknung) nicht mehr gegeben. Der Lack enthält zu wenig Bindemittel.

Feststoffgehalte über 40 Gew.-% sind im Bereich der konventionellen Beschichtungszusammensetzungen an sich bekannt - sogenannte "high-solids" - , aber für wässrige Systeme mit derart dünnen Aluminiumpigmenten nicht übertragbar. Hier würde die Rheologie der Beschichtungszusammensetzungen zu schlecht sein.

Die zur erfindungsgemäßen Lackherstellung eingesetzten Leafing-Aluminiumeffektpigmente werden vorzugsweise in Form von vorbehandelten, bevorzugt pastenförmigen Vormischungen eingesetzt, die mit erfindungsgemäß zu verwendenden wenigstens einem organofunktionellen Silan, das auch ein Polysiloxan sein kann,ohne Phasenseparationen verträglich sind, wie z. B. handelsübliche Leafing-Aluminiumpigment-Pasten aus der STAPA -Produktreihe der Fa. Eckart GmbH & Co. KG.

Der Festkörpergehalt der vorteilhaft zur Herstellung des erfindungsgemäßen Metallic-Lackes eingesetzten Aluminium-Pigmentpaste liegt vorzugsweise bei 20 Gew. -% bis 65 Gew. -%, weiter bevorzugt bei 25 bis 60 Gew. -% und ganz besonders bevorzugt bei 30 bis 55 Gew. -% sowie noch weiter bevorzugt bei 40 bis 50 Gew. -%, jeweils bezogen auf das Gesamtgewicht der Aluminiumpaste.

Bei einem Festkörpergehalt von mehr als 65 Gew. -% können die Aluminiumpigmente in der Paste agglomerieren, was die optische Wirkung entscheidend beeinträchtigen würde. Des Weiteren weist die höhere spezifische Oberfläche der extrem dünnen Pigmente einen höheren Lösungsmittelbedarf auf, um vollständig benetzt zu werden. Unterhalb von 20 Gew. -% wird die Paste zu dünnflüssig und man kann sie ohne zusätzliche Rührschritte nicht mehr exakt dosieren, um sie zum Lack zu geben.

Als Lösemittel finden bevorzugt die bereits zum Verformen der Pigmente eingesetzten Lösemittel Verwendung, wie beispielsweise Testbenzin und/oder Solvent Naphtha, Butylglycol oder Isopropanol.

Der auf einen metallischen oder sonstigen Untergrund applizierte, wässrige und überlackierbare Metallic-Lack ergibt einen hochglänzenden, strukturlos metallischen Überzug. Dessen optischer Effekt entspricht dem unter dem Begriff "Chromeffekt" bekannten Erscheinungsphänomen.

Dieser wässrige, überlackierbare Metallic-Lack mit ausgeprägtem Metallglanz findet besonders vorteilhaft Verwendung für Fahrzeuglackierungen wie beispielsweise Felgenlackierungen oder aber auch bei Fahrzeug-Reparaturlackierungen.

Der erfindungsgemäße Metallic-Lack, der auch alschromeffektlack bezeichnet werden kann, ist besonders vorteilhaft als Basislack (Grundlack) - ohne Klarlack-Lackierung - einsetzbar. Selbstverständlich kann, wenn es gewünscht sein sollte, auf diesem Basis- oder Grundlack auch eine Klarlackschicht aufgebracht werden.

Der mit allen bekannten Verfahren einfach applizierbare und problemlos überlackierbare Metallic-Lack mit sehr hohem Glanzeffekt von vorzugsweise mehr als350ist insbesondere durch eine hohe Wisch- und Kratzfestigkeit, Abriebsstabilität und Schleifriefenabdeckung gekennzeichnet.

Der wasser- und/oder lösemittelhaltige Metallic-Lack ist mit allen bekannten Applizierverfahren, wie z. B. industrielles Airless Spritzen, Tauchen, Sprühen (HVLP), Elekrostatisch (ESTA), Plasma, Fluten, Walzauftrag, Can- und Coil-Coating, auf metallische oder sonstige Untergründe, besonders vorteilhaft als Basecoat (Basislack) ohne Klarlackbeschichtung, problemlos applizierbar.

Dieser neue Metallic-Lack ist besonders vorteilhaft für hochglänzende Coatings, wie z. B. Automobillacken, Reparaturlackierungen, Industrielackierungen und Lackierungen von Metall, Kunststoffen, Holz oder Glas einsetzbar.

Der erfindungsgemäße Metallic-Lack kann als 1-Komponenten (1 K) oder aber auch als 2-Komponenten (2K) Metalliclack ausgebildet sein.

Die folgenden Beispiele erläutern die Erfindung, ohne sie jedoch zu beschränken:

**Erfindungsgemäßes Beispiel 1:**

2-Komponenten-System:

Zur Herstellung eines erfindungsgemäßen Metallic-Lackes für eine FahrzeugfelgenApplikation wurde eine mit der Bezeichnung VP-59710/G der Fa. Eckart & GmbH Co. KG, D-91235 Velden, kommerziell erhältliche Leafing-Aluminiumpigment-Paste eingesetzt. Diese Paste enthält in Isopropanol und Stearinsäure durch Kugelmühlenvermahlung erhaltene Silberdollarpigmente mit einem $h_{50}$-Wert von 120 nm (REM) und einer Teilchengrößenverteilung $d_{50}$ von 17

$\mu$m und einen $d_{90}$ von 29 $\mu$m, welche in einem handelsüblichen Bindemittelmittel (Maprenal 900W der Fa. Surface Specialties) und einem als Filmbildner eingesetzten Epoxysilan (Wetlink 78 der Fa. Fa. GE) dispergiert sind.

1 Gewichtsteil dieser Pigmentanpastung welche die Komponente 1 darstellt, wurde mit 4 Gewichtsteilen einer Komponente 2 verdünnt. Diese zweite Komponente setzt sich aus 1 Gewichtsteil organischen Lösemittel (z. B Butylglykol) sowie 3 Gewichtsteilen dem Wasser zusammen. Dieses 2 Komponenten-System wird nun 10 min bei Raumptemperatur gemischt. Die rheologischen Eigenschaften des Metallic-Lackes wurden mit handelsüblichen Verdünnern/Verdickern und die Lackspritzviskosität mit handelsüblichem Butylglykol und destilliertem Wasser eingestellt. Der einen Festkörpergehalt von 3 bis 50 Gew. -%, eine Viskosität (DIN 53211) von 11 s bis 60 s und einen Gehalt an filmbildenden Mittel von 1,0 bis 45,0 Gew. -% Silan sowie einen Gehalt von 1,0 bis 50,0 Gew. -% Melaminharz (Gew. -% (bezogen auf das Lackgesamtgewicht) aufweisende Metallic-Lack wurde mit einer HVLP-Spritzpistole (ESTA/Hochdruck/HVLP) mit 1 bis 6 bar auf einen grundierten Untergrund mit einer Schichtstärke von 1-25 $\mu$m appliziert und anschließend bei einer Temperatur von 100 bis 300 °C, 20 bis 60 min lang getrocknet.

**Erfindungsgemäßes Beispiel 2:**

a) Verdüsung:

In einem Induktionstiegelofen (Fa. Induga, Ofeninhalt ca. 2,5 to) werden Aluminiumbarren kontinuierlich eingebracht und aufgeschmolzen. Im sogenannten Vorherd liegt die Aluminiumschmelze bei einer Temperatur von etwa 720 °C flüssig vor. Mehrere Düsen, die nach einem Injektorprinzip arbeiten, tauchen in die Schmelze ein und verdüsen die Aluminiumschmelze vertikal nach oben. Das Verdüsungsgas wird in Kompressoren (Fa. Kaeser) bis auf 20 bar verdichtet und in Gaserhitzern bis auf etwa 700 C erhitzt. Der entstehende Aluminiumgrieß erstarrt und erkaltet im Fluge. Der Induktionsofen ist in eine geschlossene Anlage integriert. Die Verdüsung erfolgt unter Inertgas (Stickstoff). Die Abscheidung des Aluminiumgrieß erfolgt zuerst in einem Zyklon, wobei der dort abgeschiedene pulverförmige Aluminiumgrieß einen $d_{50}$ von 14-17 $\mu$m aufweist. Zur weiteren Abscheidung dient in Folge ein Multizyklon , wobei der in diesem abgeschiedene pulverförmige Aluminiumgrieß einen $d_{50}$ von 2,3-2,8 $\mu$m aufweist. Die Gas-Feststoff-Trennung erfolgt in einem Filter (Fa. Alpine) mit Metallelementen (Fa. Pall). Hierbei wird als feinste Fraktion ein Aluminiumgrieß mit einem $d_{10}$ von 0,4 $\mu$m, einem $d_{50}$ von 1,0 -1,9 $\mu$m und einem $d_{90}$ von 2,0 -3,8 $\mu$m gewonnen.

b) Vermahlung:

In einer Topfmühle (Länge: 32 cm, Breite: 19 cm) werden 4 kg Glaskugeln (Durchmesser: 2 mm), 75 g feinster Aluminiumgrieß aus a), 200 g Testbenzin und 3,75 g Stearinsäure aufgegeben. Anschließend wird 15 h lang bei 58 U/min vermahlen. Das Produkt wird durch Spülen mit Testbenzin von den Mahlkugeln getrennt und anschließend in einer Nasssiebung auf einem 25 $\mu$m-Sieb durchgesiebt. Das Feinkorn wird über einer Nutsche weitgehend von Testbenzin befreit und anschließend mit Testbenzin in einem Labormischer angepastet (ca. 50% Feststoffanteil).

Die in dieser Aluminiumpaste enthaltenen Platindollarpigmente weisen einen $h_{50}$-Wert von 50 (REM) und eine Teilchengrößenverteilung, die durch einen $d_{50}$ von 5 $\mu$m und einen $d_{90}$ von 11 $\mu$m (Cilas 1064) charakterisiert wird, auf.

Diese Pigmente sind in einem handelsüblichen Bindemittel (Maprenal 900W der Fa. Surface Specialties) und einem als Filmbildner eingesetzten Epoxysilan (Wetlink 78 der Fa. GE) dispergiert. Von dieser Pigmentanpastung wurde 1 Gewichtsteil mit der gleichen Menge eines organischen Lösemittels (bvz. BG) und 2 Gewichtsteilen demineralisierten Wasser sowie 1 Gewichtsteil eines handelsüblichen Bindemittels ("Setal 6608" von Fa. Cytec) eingebracht und ca. 10 min bei Raumtemperatur gemischt. In die Pigmentmischung wurden 0,05 Gewichtsteile eines handelsüblichen Katalysators ("Nacure 2500" von Fa. Worlee) eingetragen. Die rheologischen Eigenschaften des Metallic-Lackes wurden mit handelsüblichen Verdünnern eingestellt. Die Spritzviskosität des Lackes wurde mit Butylglykol und destilliertem Wasser eingestellt.

Der einen Lackfestkörper-Gehalt von 3 bis 50 Gew.-% und eine Viskosität (DIN 53211) von ca. 11 s bis 60s aufweisende Metallic-Lack wurde mit einer herkömmlichen Spritzpistole ((ESTA/Hochdruck/HVLP) mit einem Druck von 1 bis 6 bar auf einen geprimerten Untergrund appliziert und bei einer Temperatur von 80 °C bis 160°C, 5 bis 60 min getrocknet. Anschließend wurde die wässrige Leafing-Metallic-Lackbeschichtung mit einem 2K- PUR-Klarlack überlackiert und die Lackierung 30 min bei 80°C getrocknet.

**Vergleichsbeispiel 3:**

Kommerziell erhältliches Metalure® L55700 ( PVD-Pigment, Fa. Eckart), Aluminium-Pigmentdispersion in Methoxypropylacetat (10 Gew.-% Festkörperanteil)

Pigmentparameter: $h_{50}$-Wert: 47 nm (REM) und einer Teilchengrößenverteilung $d_{50}$ von 13 $\mu$m und $d_{90}$ von 21 $\mu$m (Cilas 1064).

Zur Herstellung des die PVD-Pigmente enthaltenden 2K-Metallic-Effektlackes für die Fahr-zeugfelgenapplikation wurden 15 Gewichtsteile der Aluminium-Pigmentdispersion "Metalure L55700" der Fa. Eckart in einem Dissolver (Flügelrührer) in 13 Gewichtsteilen eines handelsüblichen Filmbildners (Zelluloseesterprodukt CAB 381-2 der Fa. Eastmann) eingerührt und anschließend mit 0,1 Gewichtsteilen eines handelsüblichen Emulgators (Lipotin 100 der Fa. Cargilltexturizing) und mit 1,5 Gewichtsteilen eines handelsüblichen Acrylharzes (Uracron CY 474 E der Fa. DSM) sowie mit 0,1 Gewichtsteilen eines handelsüblichen Haftharzes (LTW der Fa. Degussa) ca. 20 min lang intensiv gemischt. In die homogenisierte Pigmentpaste wurden - unter Rühren - 24 Gewichtsteile eines handelsübliches Butylacetat 98/100 und 1,5 Gewichtsteile eines handelsüblichen, niedermolekulares Methylpolysiloxan enthaltendes Additives (Baysilone® MA mit 0,4% Xylol der Fa. Borchers) mit etwa 2,6 Gewichtsteile eines Fluor enthaltenden Benetzungsadditives (Zonyl® FSG mit 1% Butylacetat 98/100 der Fa. Degussa)) sowie mit etwa 33 Gewichtsteilen eines handelsüblichen Verdünnungsmittels (Methoxypropylacetat) dispergiert. Zur Herstellung der zweiten Lackkomponente wurden etwa 1,4 Gewichtsteile eines kommerziell gehandelten Härters (Desmodur® N 75 der Fa. Bayer) mit Butylacetat 98/100 verdünnt. Die beiden Lackkomponenten wurden erst unmittelbar vor dem Verarbeiten (Applizieren) in einem Mengenverhältnis von 9 zu 1 zu einem applizierfähigen 2K-Chromeffektlack vermischt. Die Spritzviskosität von ca. 15 s (DIN 53211 - Becher 4 mm bei 23°C) des eine Topfzeit von etwa 5 h (DIN 53150 - Becher 4 mm, 23°C) aufweisenden 2K-Metallic-Lackes wurde durch Zugabe von handelsüblichem Verdünnungsmittel (Methoxypropylacetat) eingestellt.

Der einen Festkörpergehalt von ca. 3 bis 10 Gew. -% und einen Bindemittelgehalt von 1,5 bis 8,0 Gew. -% (Gew. -% bezogen auf das Lackgesamtgewicht) aufweisende Metallic-Lack wurde mittels einer (HVLP-Spritzpistole/ ESTA/Hochdruck) mit 1 bis 6 bar auf einen grundierten Untergrund mit einer Schichtstärke von 1 - 10 $\mu$m appliziert und anschließend bei einer Temperatur von 70°C ca. 60 min getrocknet.

**Vergleichsbeispiel 4:**

Kommerziell erhältliches SILVERSHINE® P4110 (Fa. Eckart).

Hierbei handelt es sich ebenfalls um ein PVD-Aluminiumpigment, welches analog zu dem Vergleichsbeispiel 3 in das 2K-Lacksystem eingearbeitet und anschließend appliziert wurde.
Dieses non-leafing PVD-Pigment weist einen $h_{50}$-Wert von 60 nm (REM) und eine Teilchengrößenverteilung $d_{50}$ von 9-11 $\mu$m sowie $d_{90}$ von max. 20 $\mu$m (Cilas 1064) auf. Die mit diesem Pigment pigmentierte Lackherstellung/-applikation erfolgte analog Vergleichsbeispiel 3.

**Vergleichsbeispiel 5:**

SILVERSHINE® S1100 (Fa. Eckart),

Hochbrillantes non-leafing Aluminiumpigment für Lack in Anlehnung an die DE 103 15 775 A1.
Dieses Aluminiumpigmente wurde wie jenes aus Beispiel 2 hergestellt, jedoch wurde die Vermahlung des feinen Aluminiumgrisses mit einem Ölsäure enthaltenen Schmiermittels durchgeführt, was zu einen non-leafing Pigment führt.
Pigmentparameter: $h_{50}$-Wert von 50 nm (REM) und einer Teilchengrößenverteilung $d_{50}$ von 10 $\mu$m sowie $d_{90}$ von 15 $\mu$m (Cilas 1064).
Das Pigment wurde analog Beispiel 2 zu einem Lack verarbeitet und appliziert.

**Vergleichsbeispiel 6:**

Kommerziell erhältliches Silvershine® S2100 (in Anlehnung an die DE 103 15 775 A1, Fa. Eckart)
Dieses mittels konventioneller Kugelmühlenvermahlung hergestellte, in Testbenzin/Solventnaphtha gelöste, hochbrillante non-leafing Aluminiumpigment mit metallischer Optik für Lack mit einem $h_{50}$-Wert von 70 nm (REM) und einer Teilchengrößenverteilung $d_{50}$ von 20 $\mu$m und $d_{90}$ von(32 $\mu$m (Cilas 1064) wurde ebenfalls analog Beispiel 2 zu einem Lack verarbeitet und appliziert.

**Vergleichsbeispiel 7:**

Kommerziell erhältliches STAPA® METALLUX 3540 (Fa. Eckart), (non-leafing Silberdollarpigment) für Lack

Zur Herstellung dieses Metallic-Lackes für die Fahrzeugfelgenapplikation wurde eine kommerziell gehandelte Aluminium-Pigmentdispersion "STAPA METALLUX 3540" der Fa. Eckart eingesetzt. Diese Pigmentdispersion enthält in Testbenzin/Solventnaphtha kugelmühlenvermahlene Silberdollar-Aluminiumpigmente mit einem $h_{50}$-Wert von 320 nm (REM) und einer Teilchengrößenverteilung $d_{50}$ von 18 $\mu$m sowie $d_{90}$ von 27 $\mu$m (Cilas 1064).
1 Gewichtsteil dieser Pigmentdispersion wurde mit 1 Gewichtsteil Butylacetat sowie 17,5 Gewichtsteilen eines handelsüblichen Basismischlackes für Zweischicht-Metallic-Lackierungen "Mipa BC Mischlack" der Fa. MIPA, in einem Dissolver (Flügelrührer) 10 min lang bei Raumtemperatur gemischt. Die Spritzviskosität des vorliegenden Metallic-Lackes wurde mit handelsüblichem Verdünnungsmittel eingestellt. Der applizierfähige Metallic-Lack wurde mittels einer HVLP-Spritzpistole/ESTA/Hochdruck mit 1 bis 6 bar auf einen geprimerten Untergrund mit einer Schichtstärke von 10 bis 30 $\mu$m appliziert und anschließend bei einer Temperatur von 80°C 30min getrocknet.

**Vergleichsbeispiel 8:**

Kommerziell erhältliches STAPA® METALLUX 2154 (non-leafing Silberdollar, Fa. Eckart),

Diese, ein mittels konventioneller Kugelmühlenvermahlung hergestelltes und in Solvent Naphtha Ld Testbenzin (2:1 Gw/Gw) suspendiertes Silberdollarpigment für Lack mit einem $h_{50}$-Wert von 290 nm (REM) und einer Teilchengrößenverteilung $d_{50}$ von 20 $\mu$m und $d_{90}$ von 32 $\mu$m (Cilas 1064) enthaltende Aluminiumdispersion wurde ebenfalls gemäß Vergleichsbeispiel 7 zu einem Lack verarbeitet und appliziert.

**Vergleichsbeispiel 9:**

Kommerziell erhältliches STAPA® 5 (Leafing-Aluminiumpigmentpaste vom Cornflake-Typ, Fa. Eckart), für Lack.

Zur Herstellung dieses silberfarbenen Acrylat-Reflexionslackes für die Fahrzeugfelgenapplikation wurden 12 Gewichtsteile einer kommerziell gehandelten Leafing-Aluminium-Pigmentdispersion "Stapa 5" der Fa. Eckart eingesetzt. Hierbei handelt es sich um ein durch Zerkleinerungsmahlung gewonnenes Aluminiumpigment vom "Corn-flake"-Typ mit sehr rauen Oberflächen und einer Teilchengrößenverteilung $d_{50}$ von 15 $\mu$m sowie einem $d_{90}$ von 41 $\mu$m (Cilas 1064). 12 Gewichtsteile dieser Aluminium-Pigmentpaste (65 Gew.-% Festkörperanteil) wurden in einem Dissolver (Flügelrührer) mit 12 Gewichtsteilen handelsüblichem Solventnaphta angeteigt und anschließend mit 20 Gewichtsteilen einer als Bindemittel eingesetzten, handelsüblichen Acrylemulsion (Neocryl B 731 der Fa. Noveon) sowie mit 46 Gewichtsteilen eines handelsüblichen Löse-/Verdünnungsmittels (Methoxypropanol, Toluol, Kristallöl) und 2 Gewichtsteilen eines handelsüblichen "aliphatischen Amins" (Forbest 410 der Fa. Raybo) sowie 8 Gewichtsteilen einer handelsüblichen Alkydharzlösung (Uralac Oberflächenbeschichtung 331 W60 der Fa. DSM) 10 min lang bei Raumtemperatur gemischt. Die Spritzviskosität dieses Lackes (DIN 53211 - Becher 4 mm bei 23°C) von 19 s wurde durch Zugabe von handelsüblichem Verdünnungsmittel (Kristallöl 21) eingestellt. Der Metallic-Lack wurde mittels einer (HVLP-Spritzpistole/ESTA/Hochdruck) bei 1 bis 6 bar auf einen grundierten Untergrund mit einer Schichtstärke von 10 bis 30$\mu$m appliziert und anschließend 30 min bei 80°C getrocknet.

**Erfindungsgemäßes Beispiel 10**

1-Komponenten-System:

Zur Herstellung eines erfindungsgemäßen Metallic-Lackes für eine FahrzeugfelgenApplikation wurde eine mit der Bezeichnung VP-59710/G der Fa. Eckart & GmbH Co. KG, D-91235 Velden, kommerziell erhältliche Leafing-Aluminiumpigment-Paste eingesetzt. Diese Paste enthält in Isopropanol und Stearinsäure durch Kugelmühlenvermahlung erhaltene Silberdollarpigmente mit einem $h_{50}$-Wert von 120 nm (REM) und einer Teilchengrößenverteilung $d_{50}$ von 17 $\mu$m und einen $d_{90}$ von 29 $\mu$m, welche in einem handelsüblichen Bindemittelmittel (Maprenal 900W der Fa. Surface Specialties) und einem als Filmbildner eingesetzten Epoxysilan (Wetlink 78 der Fa. Fa. GE) dispergiert sind. 1 Gewichtsteil dieser Pigmentanpastung wurde mit 3 Gewichtsteilen eines organischen Lösemittel (z. B. Butylglykol) verdünnt und ca. 10 min bei Raumtemperatur gemischt.
Die rheologischen Eigenschaften des Metallic-Lackes wurden mit handelsüblichen Butylglykol eingestellt. Der einen Festkörpergehalt von 3 bis 50 Gew. -%, eine Viskosität (DIN 53211) von 11 s bis 60 s und einen Gehalt an filmbildenden Mittel von 1,0 bis 45,0 Gew. -% Silan sowie einen Gehalt von 1,0 bis 50,0 Gew. -% Melaminharz (Gew.

-% (bezogen auf das Lackgesamtgewicht) aufweisende Metallic-Lack wurde mit einer HVLP-Spritzpistole (ESTA/Hochdruck/HVLP) mit 1 bis 6 bar auf einen grundierten Untergrund mit einer Schichtstärke von 1-25 μm appliziert und anschließend bei einer Temperatur von 100 bis 300 °C, 20 bis 60 min lang getrocknet.

Von den Metallic-Applikationen (Beispielen 1 bis 9) wurden deren optische Eigenschaften hinsichtlich Glanz und Oberflächenstruktur (Dullness) ermittelt sowie visuell die Wolkenbildung beurteilt.

Die mit einem handelsüblichen Trigloss-Glanzmessgerät der Fa. Byk Gardner bei einem Messwinkel von 20° und 60° ermittelten Glanzwerte sind in nachfolgender Tabelle 1 dargestellt:

**Tabelle 1:**

| Versuch | Glanz 20° | Glanz 60° |
|---|---|---|
| Erf.- Beispiel 1 | 290 | 471 |
| Erf.- Beispiel 2 | 460 | 432 |
| Vergl.- beispiel 3 | 70 | 138 |
| Vergl.- beispiel 4 | 94 | 160 |
| Vergl.- beispiel 5 | 13 | 56 |
| Vergl.- beispiel 6 | 29 | 98 |
| Vergl.- beispiel 7 | 17 | 60 |
| Vergl.- beispiel 8 | 22 | 77 |
| Vergl.- beispiel 9 | 16 | 70 |

Aus den Messwerten der Tab. 1 ist ersichtlich, dass die erfindungsgemäßen Metallic-Lackierungen der Beispiele 1 bis 2 wesentlich höhere Glanzwerte bei beiden Messwinkeln von 20° und 60° aufweisen, als die Glanzwerte der Metallic-Lackierungen der Vergleichsbeispiele 3 bis 9.

Dabei wurde überraschend festgestellt, dass die erfindungsgemäßen Metallic-Lackierungen der Beispiele 1 und 2 auch wesentlich höhere Glanzwerte als PVD-Pigmente enthaltende Metallic-Lacke der Beispiele 3 und 4 aufweisen. Dies ist möglicherweise dadurch zu erklären, dass die im erfindungsgemäßen Metallic-Lack eingesetzten Aluminiumpigmente, aufgrund ihrer Rauheit bzw. Welligkeit, so übereinander gelagert sind, dass nur punktförmige Kontaktflächen zueinander bestehen. Dadurch wird - im Unterschied zu PVD-Pigmenten - die Ausbildung von kurz reichenden Anziehungskräften, wie van der Waals-Kräfte oder Wasserstoffbrücken, minimiert und mithin eine Agglomeration oder Aggregation der Aluminiumpigmente im Lack erschwert, wodurch sich die Leafing-Aluminiumpigmente im Bereich der Lackoberfläche derart anordnen, d. h. parallel zur Lackoberfläche ausrichten, dass das auf die Lackoberfläche treffenden Lichtstrahlen so reflektiert werden (Spiegeleffekt), das der Lack hohe Glanzwerte aufweist.

Weiterhin wurde visuell festgestellt, dass die erfindungsgemäßen Metallic-Lackierungen der erfindungsgemäßen Beispiele 1 und 2 keine mit dem bloßen Auge erkennbaren Strukturen aufweisen. Der optische Eindruck dieser Lackierungen entspricht dem eines "flüssigen" Metalls. Dagegen sind die mit herkömmlichen Metallic-Lacken durchgeführten Lackierungen der Vergleichsbeispiele 4 bis 9 und hierbei insbesondere die der Beispiele 5 bis 9, durch eine mehr oder weniger deutliche Oberflächenstrukturierung geprägt. Obwohl das menschliche Auge nicht die einzelnen Pigmentteilchen in der Lackierung zu unterscheiden vermag, sieht man doch partikuläre Strukturen.

Des Weiteren wurde die Lackoberfläche der Metallic- Lackierungen der Beispiele 1 bis 9 auf unerwünschte Wolkenbildung bewertet. Unter Wolkenbildung versteht man die Hell-Dunkel-Schattierungen auf der Lackoberfläche. Dieses die Oberflächenqualität negativ beeinträchtigendes und somit die optische Lackierqualität verminderndes optische Erscheinungsbild spielt vor allem bei geringen Lackschichtstärken und großflächigen Lackierungen eine besonders große Rolle.

Im Ergebnis dieser visuellen Bewertung der Metallic-Lackierungen der Beispiele 1 bis 9 bei vergleichbaren Applikationsbedingungen (Lackierung eines Keils mittels pneumatischer Applikation auf dem LabPainter der Fa. LacTec; Prüftafeln der Größe 70cm x 30cm; Förderergeschwindigkeit von 0,8 m/s; Pistolen-Lackmenge 200 ml/min; Hornluft 400 NL/min und Zerstäuberluft bei 6000 NL/min; Filmstärke des trockenen Lackfilmes (Keil) 5-24 μm) wurde ermittelt, dass die aus den erfindungsgemäßen Metallic-Lacken der erfindungsgemäßen Beispiele 1 und 2 hergestellten Metallic-Lackierungen - wie auch die Leafing-Eigenschaften aufweisende aber nicht überlackierbare Metallic-Lackierung gemäß Beispiel 9 - eine oder zumindest eine geringere Wolkenbildung als die Metallic-Lackierungen der Vergleichsbeispiele 3 bis 8 - wie nachfolgender Tabelle 2 zu entnehmen - aufweisen.

**Tabelle 2:**

| Versuch | Note (1-5) | **Dullness (Dorigon)** (Longwave) |
|---|---|---|
| Erf.-Beispiel 1 | 1 | 63,2 |
| Erf.-Beispiel 2 | 1 | 45,3 |
| Vergl.-Beispiel 3 | 4 | 79,0 |
| Vergl.-Beispiel 4 | 4 | 73.6 |
| Vergl.-Beispiel 5 | 3 | 91,0 |
| Vergl.-Beispiel 6 | 3 | 87,4 |
| Vergl.-Beispiel 7 | 2 | 92,4 |
| Vergl.-Beispiel 8 | 2 | 87,9 |
| Vergl.-Beispiel 9 | 1 | 94,5 |

Der vorstehender Tabelle 2 zu entnehmende, vorteilhafte optische Effekt der erfindungsgemäßen Lackierungen (erfindungsgemäße Beispiele 1 und 2) gegenüber herkömmlichen Lackierungen (Vergleichsbeispiele 3 bis 9) ist mit der optimalen Orientierung in der Lackschicht der sehr dünnen plättchenförmigen Aluminiumpigmente und mit deren hohen Deckfähigkeit zu erklären. Diese beiden Pigmenteffekte bewirken die geringe Neigung zur Wolkenbildung bei geringen Lackschichtdicken.

Schließlich wurde das optische Erscheinungsbild (Appearance) der Metallic-Lackierungen gemäß Beispiele 1 bis 9 hinsichtlich "Waviness" ("Welligkeit") und "Orange peel"- ("Orangenhaut") untersucht. Dazu wurden mit herkömmlicher Messtechnik (micro-wave-scan) der Fa. BYK Gardner die "Dullness"(Longwave) - Werte ermittelt, die ebenfalls Tabelle 2 zu entnehmen sind:

Ziel der den Messwerten der Tab.2 zugrunde liegenden Messungen war eine Korrelation der visuellen Beurteilung mit den entsprechenden Messungen der Abbildungsschärfe DOI (Distinctness of Image). Der DOI wird aus den Messgrößen "Dullness" (du) und Welligkeit (Wa, Wb) berechnet, d.h. DOI = f(du, Wa, Wb). Lichtstreuende Zentren <0,1mm beeinflusst Dullness (dU), Welligkeit (Wa, Wb) repräsentieren Wellenstrukturen der Größenordnung 0,1-0,3 mm bzw. 0,3-1,0 mm. Der berechnete DOI sowie die Messwerte Dullness (dU) und Welligkeit (Wa, Wb) werden auf einer Skala von 0-100 angegeben, wobei ein höherer Zahlenwert hinsichtlich DOI positiv, bezüglich Dullness (du) und Welligkeit (Wa, Wb) dagegen negativ zu werten ist.

Die Messwerte der vorstehende Tabelle 2 belegen, dass das optische Erscheinungsbild der den erfindungsgemäßen Metallic-Lack enthaltenden Lackierungen der Beispiele 1 und 2 eine wesentlich geringere Welligkeit mit wesentlich weniger "Orangenhaut" aufweist als das optische Erscheinungsbild der kommerziell gehandelte Metallic-Lacke enthaltenden Metallic-Lackierungen der Beispiele 3 bis 9.

In zusammenfassender Bewertung der Versuchsergebnisse ist festzustellen, dass die mit den erfindungsgemäßen Metallic-Lack enthaltenden Lackierungen bei der Fahrzeugfelgenapplikation deutlich bessere optische Eigenschaften hinsichtlich Glanz und Wolkenbildung mit einer wesentlich besseren Optik hinsichtlich "Welligkeit" und "Orangenhaut" als die Lackierungen von kommerziell gehandelten Metallic-Lacken aufweisen.

Der erfindungsgemäße, wässrige Metallic-Lack mit ausgeprägtem Metallglanz (Chromeffekt) weist zudem eine bei herkömmlichen PVD-Lacken bisher unerreichte Schleiffriefenabdeckung auf und ist sowohl als Einschichtlack als auch als Basislack in Mehrschichtlackierungen von metallischen Oberflächen, besonders vorteilhaft für die Fahrzeuglakkierung, ganz besonders vorteilhaft für die Fahrzeugfelgenlackierung, mit hoher Ergiebigkeit einsetzbar.

Gemäß einer bevorzugten erfindungsgemäßen Ausführungsform des Metallic-Lacks nach Anspruch 1 oder 2 enthält das filmbildende Mittel zusätzlich wenigstens eine Harzkomponente und weiter bevorzugt ist die wenigstens eine Harzkomponente des filmbildenden Mittels ein Aminogruppe-haltiges Harz und vorzugsweise ein Melaminharz.

Gemäß einer weiter bevorzugten erfindungsgemäßen Ausführungsform des Metallic-Lacks nach einem der Ansprüche 1 bis 3 weist der Metallic-Lack einen Gehalt an Lösemittel von 5 bis 85 Gew.-%, bezogen auf das Gesamtgewicht des Lackes, auf.

Gemäß einer weiter bevorzugten erfindungsgemäßen Ausführungsform des Metallic-Lacks nach einem der Ansprüche 1 bis 3 weist der Metallic-Lack einen Wassergehalt von 5 bis 85 Gew.-%, bezogen auf das Gesamtgewicht des Lackes, auf.

Gemäß einer weiter bevorzugten erfindungsgemäßen Ausführungsform des Metallic-Lacks nach einem der Ansprüche 1 bis 3 weist der Metallic-Lack einen Feststoffgehalt von 5 bis 40 Gew.-%, bezogen auf das Gesamtgewicht des Lackes, auf.

Gemäß einer weiter bevorzugten erfindungsgemäßen Ausführungsform des Metallic-Lacks nach Anspruch 4 ist das mindestens eine Epoxysilan eine Verbindung der allgemeinen Formel (IV):

$$R^1_a R^2_b SiX_{(4-a-b)} \qquad (IV)$$

wobei $R^1$ für einen nicht hydrolysierbaren Rest, $R^2$ für einen mindestens eine Epoxygruppe tragenden, nicht hydrolysierbaren Rest und X für gleiche oder voneinander verschiedene Reste steht, die ausgewählt sind aus Hydroxylgruppe und hydrolysierbaren Substitutionsprodukten einer Hydroxylgruppe, wobei a ganzzahlige Werte von 0 bis 3 und b ganzzahlige Werte von 1 bis 3 annehmen können und a und b zusammen den Wert 1, 2 oder 3 haben, oder ein von der Verbindung gemäß Formel (IV) abgeleitetes Si-O-Si-verbrücktes oligomeres oder polymeres Epoxysilikon.

Gemäß einer weiter bevorzugten erfindungsgemäßen Ausführungsform des Metallic-Lacks nach einem der Ansprüche 1 bis 4 sind die Leafing-Aluminiumeffektpigmente vorzugsweise durch mechanische Vermahlung und/oder Verformung von Aluminiumpartikeln unter Verwendung von wenigstens einem organischen Schmiermittel, bevorzugt Stearinsäure, hergestellte Leafing-Aluminiumeffektpigmente.

Gemäß einer weiter bevorzugten erfindungsgemäßen Ausführungsform des Metallic-Lacks nach einem der Ansprüche 1 bis 7 weisen die leafing-Aluminiumeffektpigmente einen $d_{50}$-Wert von 2 bis 25 $\mu$m auf.

Gemäß einer weiter bevorzugten erfindungsgemäßen Ausführungsform des Metallic-Lacks nach einem der Ansprüche 1 bis 7 weisen die leafing-Aluminiumeffektpigmente einen $d_{90}$-Wert von 8 bis 40 $\mu$m auf.

Gemäß einer weiter bevorzugten erfindungsgemäßen Ausführungsform des Metallic-Lacks nach einem der Ansprüche 1 bis 7 weisen die leafing-Aluminiumeffektpigmente eine mittlere Dicke von 15 bis 100 nm auf.

Gemäß einer weiter bevorzugten erfindungsgemäßen Ausführungsform des Metallic-Lacks nach einem der Ansprüche 1 bis 8 weisen die leafing-Aluminiumpigmente einen Formfaktor von 80 bis 400 auf.

Gemäß einer weiter bevorzugten erfindungsgemäßen Ausführungsform des Metallic-Lacks nach einem der Ansprüche 1 bis 8 weisen die leafing-Aluminiumeffektpigmente einen Rauwert von 0,5 bis 1,0 auf.

## Patentansprüche

1. Metallic-Lack, enthaltend Wasser und/oder organisches Lösemittel sowie wenigstens ein filmbildendes Mittel, wenigstens ein organofunktionelles Silan und wenigstens ein Metalleffektpigment,
   **dadurch gekennzeichnet,**
   **dass** das Metalleffektpigment ein leafing-Aluminiumeffektpigment ist.

2. Metallic-Lack nach Anspruch 1,
   **dadurch gekennzeichnet,**
   **dass** die leafing-Aluminiumeffektpigmente ein Röntgendiffraktogramm mit einem, zwei oder mehreren Hauptpeaks, die nicht den [111]- und/oder [222]-Reflexen entsprechen, aufweisen.

3. Metallic-Lack nach Anspruch 1 oder 2,
   **dadurch gekennzeichnet,**
   **dass** das Verhältnis der Gewichtsanteile von Aluminiumeffektpigment zu filmbildendem Mittel 1:1 bis 1:30, bevorzugt 1:3 bis 1:20, besonders bevorzugt 1:4 bis 1:15, beträgt.

4. Metallic-Lack nach einem der vorstehenden Ansprüche,
   **dadurch gekennzeichnet,**
   **dass** das wenigstens eine organofunktionelle Silan ein Epoxysilan umfasst oder ist.

5. Metallic-Lack nach einem der vorstehenden Ansprüche,
   **dadurch gekennzeichnet,**
   **dass** die Leafing-Aluminiumeffektpigmente einen $d_{50}$-Wert von 11 bis 35 $\mu$m aufweisen.

6. Metallic-Lack nach Anspruch 5,
   **dadurch gekennzeichnet,**
   **dass** die leafing-Aluminiumeffektpigmente einen $d_{90}$-Wert von 25 bis 50 $\mu$m aufweisen.

7. Metallic-Lack nach einem der Ansprüche 5 oder 6,
   **dadurch gekennzeichnet,**
   **dass** die leafing-Aluminiumeffektpigmente eine mittlere Dicke von über 80 bis 150 nm aufweisen.

**8.** Metallic-Lack nach einem der vorhergehenden Ansprüche,
**dadurch gekennzeichnet,**
**dass** die leafing-Aluminiumeffektpigmente eine relative Breite der Dickenverteilung $\Delta h$, welche anhand der entsprechenden Summendurchgangskurve der relativen Häufigkeiten nach der Formel $\Delta h = 100 \times (h_{90} - h_{10}) / h_{50}$, berechnet wird, von 30 bis unter 70% aufweisen.

**9.** Metallic-Lack nach einem der Ansprüche 1 bis 8,
**dadurch gekennzeichnet,**
**dass** dieser nach Aufbringen und Trocknung auf ein Substrat einen hochglänzenden, strukturlosen, metallischen Überzug ausbildet.

**10.** Metallic-Lack nach einem den Ansprüche 1 bis 9,
**dadurch gekennzeichnet,**
**dass** dieser zusätzlich Zusatzstoffe wie Füllstoffe, Reaktiwerdünner, UV-Absorber, Lichtschutzmittel, Radikalfänger, Photoinitiatoren oder Coinitiatoren, Vernetzungsmittel, Entlüftungsmittel, Slipadditive, Inhibitoren, Entschäumungsmittel, Emulgatoren, Netz- und Dispergiermittel, Haftvermittler, Verlaufsmittel, filmbildende Hilfsmittel, Verdicker, Flammschutzmittel, Sikkative, Trocknungsmittel, Hautverhinderungsmittel, Korrosionsinhibitoren, Korrosionsschutzpigmente, Wachse und/oder Kombinationen dieser Zusatzstoffe enthalten kann.

**11.** Verfahren zur Herstellung eines Metallic-Lackes nach einem der Ansprüche 1 bis 10, das folgenden Schritt umfasst:

Vermengen von Leafing-Aluminiumeffektpigmenten, wenigstens einem organofunktionellen Silan sowie wenigstens einem filmbildenden Bindemittel.

**12.** Verfahren nach Anspruch 11,
**dadurch gekennzeichnet,**
**dass** die Leafing-Aluminiumeffektpigmente durch mechanische Vermahlung und/oder mechanische Verformung von Aluminiumpartikeln unter Verwendung von wenigstens einem organischen Schmiermittel, bevorzugt Stearinsäure, hergestellt werden.

**13.** Verwendung eines Metallic-Lackes nach einem der Ansprüche 1 bis 10 in hochglänzenden Coatings mit ausgeprägtem Metalliceffekt, wie Automobillacken, Reparaturlackierungen, Industrielackierungen und Lackierungen von Metall, Kunststoffen, Holz oder Glas.

**14.** Lackierter Gegenstand,
**dadurch gekennzeichnet,**
**dass** der lackierte Gegenstand mit einem Metallic-Lack nach einem der Ansprüche 1 bis 10 lackiert ist.

**15.** Fahrzeuglackierung, vorzugsweise eine Felgenlackierung, mit einem Metallic-Lack nach einem der Ansprüche 1 bis 10.

**Claims**

**1.** Metallic lacquer comprising water and/or organic solvent as well as at least one film-forming agent, at least one organofunctional silane and at least one metal effect pigment,
**characterised in that**
the metal effect pigment is a leafing aluminium effect pigment.

**2.** Metallic lacquer according to claim 1,
**characterised in that**
the leafing aluminium effect pigments have an X-ray diffractogram with one, two or more main peaks which do not correspond to the [111]- and/or [222]-reflexes.

**3.** Metallic lacquer according to claim 1 or 2,
**characterised in that**
the ratio of the parts by weight of aluminium effect pigment to film-forming agent is from 1:1 to 1:30, preferably from 1:3 to 1:20, particularly preferably from 1:4 to 1:15.

4. Metallic lacquer according to any one of the preceding claims,
   **characterised in that**
   the at least one organofunctional silane comprises or is an epoxysilane.

5. Metallic lacquer according to any one of the preceding claims,
   **characterised in that**
   the leafing aluminium effect pigments have a $d_{50}$ value of from 11 to 35 $\mu$m.

6. Metallic lacquer according to claim 5,
   **characterised in that**
   the leafing aluminium effect pigments have a $d_{90}$ value of from 25 to 50 $\mu$m.

7. Metallic lacquer according to either claim 5 or claim 6,
   **characterised in that**
   the leafing aluminium effect pigments have a mean thickness of from over 80 to 150 nm.

8. Metallic lacquer according to any one of the preceding claims,
   **characterised in that**
   the leafing aluminium effect pigments have a relative width of the thickness distribution $\Delta$h, which is calculated by means of the corresponding cumulative relative frequency curve according to the formula $\Delta h = 100 \times (h_{90} - h_{10})/h_{50}$, of from 30 to less than 70%.

9. Metallic lacquer according to any one of claims 1 to 8,
   **characterised in that**
   after application to and drying on a substrate, it forms a high-gloss, untextured, metallic coating.

10. Metallic lacquer according to any one of claims 1 to 9,
    **characterised in that**
    it can additionally comprise additives such as fillers, reactive diluents, UV absorbers, light stabilisers, radical acceptors, photoinitiators or coinitiators, crosslinkers, deaerating agents, slip additives, inhibitors, antifoams, emulsifiers, wetting and dispersing agents, adhesion promoters, flow improvers, film-forming aids, thickeners, flameproofing agents, siccatives, drying agents, anti-skinning agents, corrosion inhibitors, anticorrosive pigments, waxes and/or combinations of these additives.

11. Process for the production of a metallic lacquer according to any one of claims 1 to 10, which comprises the following step:

    mixing leafing aluminium effect pigments, at least one organofunctional silane and at least one film-forming binder.

12. Process according to claim 11,
    **characterised in that**
    the leafing aluminium effect pigments are prepared by mechanical grinding and/or mechanical deformation of aluminium particles using at least one organic lubricant, preferably stearic acid.

13. Use of a metallic lacquer according to any one of claims 1 to 10 in high-gloss coatings having a pronounced metallic effect, such as automotive lacquers, repair lacquers, industrial lacquers and lacquers for metal, plastics, wood or glass.

14. Lacquered object,
    **characterised in that**
    the lacquered object has been lacquered with a metallic lacquer according to any one of claims 1 to 10.

15. Motor vehicle lacquer coating, preferably a wheel rim lacquer coating, comprising a metallic lacquer according to any one of claims 1 to 10.

**Revendications**

1. Peinture métallique, contenant de l'eau et/ou un solvant organique ainsi que au moins un produit formant un film, au moins un silane organofonctionnel et au moins un pigment à effet métallique,
   **caractérisée en ce que**
   le pigment à effet métallique est un pigment à effet de feuille d'aluminium.

2. Peinture métallique selon la revendication 1
   **caractérisée en ce que** les pigments à effet de feuille d'aluminium présentent un difractogramme de rayons X avec un, deux ou plusieurs pics principaux qui ne correspondent pas aux reflets [111] et/ou [222],

3. Peinture métallique selon la revendication 1 ou 2,
   **caractérisée en ce que**
   le rapport entre les poids du pigment à effet d'aluminium et du produit de formation d'un film est de 1 :1 à 1 :30, de préférence de 1 :3 à 1 :20, particulièrement privilégié de 1 :4 à 1 :15.

4. Peinture métallique selon l'une des revendications précédentes
   **caractérisée en ce que**
   le silane organofonctionnel, au moins au nombre de un, comporte ou est un silane époxyde.

5. Peinture métallique selon l'une des revendications précédentes
   **caractérisée en ce que**
   les pigments à effet de feuille d'aluminium présentent une valeur $d_{50}$ de 11 à 35 $\mu$m.

6. Peinture métallique selon la revendication 5
   **caractérisée en ce que**
   les pigments à effet de feuille d'aluminium présentent une valeur $d_{90}$ de 25 à 50 $\mu$m.

7. Peinture métallique selon l'une des revendications 5 ou 6
   **caractérisée en ce que**
   les pigments à effet de feuille d'aluminium présentent une épaisseur moyenne de plus de 80 nm et pouvant aller jusqu'à 150 nm.

8. Peinture métallique selon l'une des revendications précédentes
   **caractérisée en ce que**
   les pigments à effet de feuille d'aluminium présentent une largeur relative de la répartition de l'épaisseur $\Delta h$, qui est calculée à l'aide de la courbe de transition des sommes correspondante de la fréquence relative selon la formule $\Delta h = 100 \times (h_{90}-h_{10}) / h_{50}$, allant de 30 à moins de 70%.

9. Peinture métallique selon l'une des revendications 1 à 8,
   **caractérisée en ce que**
   celle-ci, après application et séchage sur un substrat, forme un revêtement hautement brillant, sans structure, métallique.

10. Peinture métallique selon l'une des revendications 1 à 9
    **caractérisée en ce que**
    peut comporter des substances complémentaires telles que des matières de charge, des diluant réactifs, des absorbeurs de rayons UV, des produits de protection contre la lumière, des capteurs radicaux, des photoinitiateurs, ou des co-initiateurs, des produits de réticulation, des produits d'aération, des additifs de halage, des inhibiteurs, des agents antimoussant, des agents émulsifiants, des agents de dispersion et tensio-actifs, des agents d'adhérence, des agents d'écoulement, des agents auxiliaires de formation de film, des épaississants, des agents ignifuges, des siccatifs, des agents de séchage, des agents antipelliculaires, des inhibiteurs de corrosion, des pigments anticorrosion, des cires et des combinaisons de ces substances complémentaires.

11. Procédé de fabrication d'une peinture métallique selon l'une des revendications 1 à 10,
    Comportant l'étape suivante :

    mélange de pigments à effet de feuille d'aluminium, au moins d'un silane organofonctionnel ainsi qu'au moins un liant formant un film.

12. Procédé selon la revendication 11,
**caractérisé en ce que**
les pigments à effet de feuille d'aluminium sont fabriqués par broyage mécanique et/ou déformation mécanique de particules d'aluminium avec utilisation d'au moins un agent de graissage organique, de préférence un acide stéarique.

13. Utilisation d'une peinture métallique selon l'une des revendications 1 à 10 dans des revêtements hautement brillants avec effet métallique, comme les peintures pour voiture, les peintures de réparation, les peintures industrielles et les peintures de métaux, de matières plastiques, de bois ou de verre.

14. Objet peint,
**caractérisé en ce que**
l'objet peint est peint avec une peinture métallique conforme à l'une des revendications 1 à 10

15. Peinture de voiture, de préférence peinture de jante avec une peinture métallique conforme à l'une des revendications 1 à 10.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0259592 B1
- WO 0181483 A
- WO 2006110331 A1
- DE 10039404 A1
- DE 19820112 A1
- DE 2630731 B2
- DE 10100195 A1
- WO 2005118722 A
- DE 69706471 T2
- DE 202006016073 U1
- DE 10154030 A1
- DE 69625797 T2
- DE 102005026523 A1
- EP 0451785 B1
- DE 10315775 A1
- US 7109263 B2